(19) Europäisches Patentamt
European Patent Office
Office européen des brevets

(11) EP 4 521 779 A1

(12) EUROPEAN PATENT APPLICATION
published in accordance with Art. 153(4) EPC

(43) Date of publication:
12.03.2025 Bulletin 2025/11

(51) International Patent Classification (IPC):
H04W 4/02 (2018.01)

(21) Application number: 23806876.1

(52) Cooperative Patent Classification (CPC):
H04W 4/02

(22) Date of filing: 15.05.2023

(86) International application number:
PCT/CN2023/094200

(87) International publication number:
WO 2023/221924 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.05.2022 CN 202210555591
25.06.2022 CN 202210728631

(71) Applicant: Huawei Technologies Co., Ltd.
Shenzhen, Guangdong 518129 (CN)

(72) Inventors:
• ZHANG, Mengchen
Shenzhen, Guangdong 518129 (CN)
• YAO, Chuting
Shenzhen, Guangdong 518129 (CN)
• XU, Haibo
Shenzhen, Guangdong 518129 (CN)

(74) Representative: Maiwald GmbH
Engineering
Elisenhof
Elisenstrasse 3
80335 München (DE)

(54) **POSITIONING METHOD AND COMMUNICATION APPARATUS**

(57) A positioning method and a communication apparatus are provided. The method includes: A first terminal device obtains first information. The first information includes synchronization information of a second terminal device. The synchronization information of the second terminal device includes synchronization information between the second terminal device and a synchronization source of the second terminal device. The second terminal device is configured to assist in positioning a location of the first terminal device. The second terminal device communicates with the first terminal device through a sidelink. The first terminal device determines location information of the first terminal device based on the first information. According to the method, the first terminal device can accurately calculate the location information of the first terminal device in a positioning scenario including sidelink communication.

S801: A first terminal device obtains first information, where the first information includes synchronization information of a second terminal device, the synchronization information of the second terminal device includes synchronization information between the second terminal device and a synchronization source of the second terminal device, the second terminal device is configured to assist in positioning a location of the first terminal device, and the second terminal device communicates with the first terminal device through a sidelink

S802: The first terminal device determines location information of the first terminal device based on the first information

FIG. 8

## Description

This application claims priorities to Chinese Patent Application No. 202210728631.X, filed with the China National Intellectual Property Administration on June 25, 2022 and entitled "POSITIONING METHOD AND COMMUNICATION APPARATUS", and to Chinese Patent Application No. 202210555591.3, filed with the China National Intellectual Property Administration on May 20, 2022 and entitled "COMMUNICATION METHOD", both of which are incorporated herein by reference in their entireties.

## TECHNICAL FIELD

This application relates to the field of wireless communication, and more specifically, to a positioning method and a communication apparatus.

## BACKGROUND

A current positioning method is mainly used to position a target terminal device based on a reference signal of a Uu interface in a positioning scenario. When a sidelink is used in the positioning scenario, to be specific, at least one network element, terminal, or entity (for example, a road side unit (road side unit, RSU)) that can send a reference signal of a PC5 interface is used in the positioning scenario, the target terminal device needs to be positioned based on the reference signal of the Uu interface and the reference signal of the PC5 interface in the positioning scenario, or the target terminal device needs to be positioned based only on the reference signal of the PC5 interface in the positioning scenario. However, because sending and receiving of the sidelink reference signal of the PC5 interface are different from sending and receiving of the reference signal of the Uu interface, location information of the target terminal device cannot be accurately calculated.

## SUMMARY

Embodiments of this application provide a positioning method and a communication apparatus. In this method, a location of a target terminal device may be accurately calculated in a positioning scenario including sidelink communication.

According to a first aspect, a positioning method is provided. The method may be performed by a first terminal device, or may be performed by a component (for example, a chip or a circuit) of the first terminal device. This is not limited. For ease of description, an example in which the method is performed by the first terminal device is used below for description.

The method may include: The first terminal device obtains first information. The first information includes synchronization information of a second terminal device. The synchronization information of the second terminal device includes synchronization information between the second terminal device and a synchronization source of the second terminal device. The second terminal device is configured to assist in positioning a location of the first terminal device. The second terminal device communicates with the first terminal device through a sidelink. The first terminal device determines location information of the first terminal device based on the first information.

Based on the foregoing technical solution, when the second terminal device that assists in positioning the location of the first terminal device communicates with the first terminal device through the sidelink in a positioning scenario, to be specific, when the first terminal device needs to be positioned based on a sidelink reference signal of a PC5 interface in the positioning scenario, the first terminal device can accurately calculate the location information of the first terminal device based on the obtained synchronization information of the second terminal device.

With reference to the first aspect, in some implementations of the first aspect, that the first terminal device obtains first information includes: The first terminal device receives the first information from a second network device.

It should be understood that the second network device in this application is a device having a location management function. For example, the second network device may be a part of a core network, or may be integrated into a network device. For example, the second network device may be a location management function LMF, or a location management component LMC in a serving network device of a to-be-positioned terminal device. The second network device may also be referred to as a location management device or a location center. A name of the location management device is not limited in this application. In a future evolved technology, the location management device may also be assigned another name. With reference to the first aspect, in some implementations of the first aspect, that the first terminal device obtains first information includes: The first terminal device receives a first configuration message from a second network device. The first configuration message includes configuration information of a sidelink reference signal of the second terminal device. The configuration information of the sidelink reference signal of the second terminal device is used by the first terminal device to receive the sidelink reference signal of the second terminal device. The first configuration message further includes the first information.

With reference to the first aspect, in some implementations of the first aspect, that the first terminal device obtains first information includes: The first terminal device receives the first information from the second terminal device.

With reference to the first aspect, in some implementations of the first aspect, the method further includes: The first terminal device receives a second configuration message from the second terminal device. The second configuration message includes configuration information of a sidelink reference signal of the second terminal device. The configuration information of the sidelink reference signal of the second terminal device is used by the first terminal device to receive the sidelink reference signal of the second terminal device. The second configuration message further includes the first information.

With reference to the first aspect, in some implementations of the first aspect, the method further includes: The first terminal device sends a first message to the second network device. The first message includes an identifier of the second terminal device.

Based on the foregoing technical solution, the first terminal device may report, to the second network device, the identifier of the second terminal device that can be configured to position the location of the first terminal device, to avoid a resource waste caused when the second terminal device that does not need to send a sidelink reference signal also sends the sidelink reference signal to the first terminal device.

With reference to the first aspect, in some implementations of the first aspect, the second terminal device is one or more terminal devices.

According to a second aspect, a positioning method is provided. The method may be performed by a second network device, or may be performed by a component (for example, a chip or a circuit) of the second network device. This is not limited. For ease of description, an example in which the method is performed by the second network device is used below for description.

The method may include: The second network device obtains first information. The first information includes synchronization information of a second terminal device. The synchronization information of the second terminal device includes synchronization information between the second terminal device and a synchronization source of the second terminal device. The second terminal device is configured to assist in positioning a location of a first terminal device. The second terminal device communicates with the first terminal device through a sidelink. The second network device determines location information of the first terminal device based on the first information.

Based on the foregoing technical solution, when the second terminal device that assists in positioning the location of the first terminal device communicates with the first terminal device through the sidelink in a positioning scenario, to be specific, when the first terminal device needs to be positioned based on a reference signal of a PC5 interface in the positioning scenario, the second network device can accurately calculate the location information of the first terminal device based on the obtained synchronization information of the second terminal device.

With reference to the second aspect, in some implementations of the second aspect, that the second network device obtains first information includes: The second network device receives the first information from the second terminal device.

With reference to the second aspect, in some implementations of the second aspect, that the second network device obtains first information includes: The second network device receives the first information from a serving base station network device of the second terminal device.

With reference to the second aspect, in some implementations of the second aspect, that the second network device obtains first information includes: The second network device receives the first information from the first terminal device.

With reference to the second aspect, in some implementations of the second aspect, the method further includes: The second network device sends a first request message to the second terminal device. The first request message is used to request the synchronization information of the second terminal device. The second network device receives a first request response message from the second terminal device. The first request response message includes the first information.

With reference to the second aspect, in some implementations of the second aspect, the method further includes: The second network device sends a second request message to the serving base station network device of the second terminal device. The second request message is used to request the synchronization information of the second terminal device. The second network device receives a second request response message from the serving base station network device of the second terminal device. The second request response message includes the first information.

With reference to the second aspect, in some implementations of the second aspect, the method further includes: The second network device sends a third request message to the first terminal device. The third request message is used to request the synchronization information of the second terminal device. The second network device receives a third request response message from the first terminal device. The third request response message includes the first information.

With reference to the second aspect, in some implementations of the second aspect, the method further includes:

The second network device sends a fourth request message to a serving base station network device of the second terminal device. The fourth request message is used to request to configure configuration information of a sidelink reference signal of the second terminal device. The configuration information of the sidelink reference signal of the second terminal device is used by the first terminal device to receive the sidelink reference signal of the second terminal device. The second network device receives a fourth request response message from the serving base station network device of the second terminal device. The fourth request response message includes the configuration information of the sidelink reference signal of the second terminal device. The fourth request response message includes the first information.

With reference to the second aspect, in some implementations of the second aspect, the method further includes: The second network device sends a first configuration message to the first terminal device. The first configuration message includes configuration information of a sidelink reference signal of the second terminal device. The configuration information of the sidelink reference signal of the second terminal device is used by the first terminal device to receive the sidelink reference signal of the second terminal device. The first configuration message further includes the first information.

With reference to the second aspect, in some implementations of the second aspect, the method further includes: The second network device receives a first message from the first terminal device. The first message includes an identifier of the second terminal device. The second network device sends first indication information to a third terminal device. The first indication information indicates the third terminal device not to send a reference signal to the first terminal device. The third terminal device is a terminal device other than the second terminal device in all terminal devices covered by all network devices that the second network device requests to assist in positioning the first terminal device.

Based on the foregoing technical solution, the second network device receives the identifier that is reported by the first terminal device and that is of the second terminal device that can be configured to position the location of the first terminal device, and sends the first indication information to the third terminal device, to avoid a resource waste caused when the terminal device that does not need to send a sidelink reference signal also sends the sidelink reference signal to the first terminal device.

With reference to the second aspect, in some implementations of the second aspect, the method further includes: The second terminal device is one or more terminal devices.

According to a third aspect, a positioning method is provided. The method may be performed by a first terminal device, or may be performed by a component (for example, a chip or a circuit) of the first terminal device. This is not limited. For ease of description, an example in which the method is performed by the first terminal device is used below for description.

The method may include: The first terminal device obtains first information. The first information includes synchronization information of a second terminal device. The synchronization information of the second terminal device includes synchronization information between the second terminal device and a synchronization source of the second terminal device. The second terminal device is configured to assist in positioning a location of the first terminal device. The second terminal device communicates with the first terminal device through a sidelink. The first terminal device sends the first information to a second network device.

Based on the foregoing technical solution, when the second terminal device that assists in positioning the location of the first terminal device communicates with the first terminal device through the sidelink in a positioning scenario, to be specific, when the first terminal device needs to be positioned based on a reference signal of a PC5 interface in the positioning scenario, the first terminal device may send the synchronization information of the second terminal device to the second network device, so that the second network device can accurately calculate the location information of the first terminal device.

With reference to the third aspect, in some implementations of the third aspect, that the first terminal device obtains first information includes: The first terminal device receives the first information from the second terminal device.

With reference to the third aspect, in some implementations of the third aspect, the method further includes: The first terminal device receives a second configuration message from the second terminal device. The second configuration message includes configuration information of a sidelink reference signal of the second terminal device. The configuration information of the sidelink reference signal of the second terminal device is used by the first terminal device to receive the sidelink reference signal of the second terminal device. The second configuration message further includes the first information.

With reference to the third aspect, in some implementations of the third aspect, the method further includes: The first terminal device sends a first message to the second network device. The first message includes an identifier of the second terminal device.

With reference to the third aspect, in some implementations of the third aspect, the second terminal device is one or more terminal devices.

According to a fourth aspect, a positioning method is provided. The method may be performed by a second network device, or may be performed by a component (for example, a chip or a circuit) of the second network device. This is not limited. For ease of description, an example in which the method is performed by the second network device is used below for description.

The method may include: The second network device obtains first information. The first information includes synchronization information of the second terminal device. The synchronization information of the second terminal device includes synchronization information between the second terminal device and a synchronization source of the second terminal device. The second terminal device is configured to assist in positioning a location of a first terminal device. The second terminal device communicates with the first terminal device through a sidelink. The second network device sends the first information to the first terminal device.

Based on the foregoing technical solution, when the second terminal device that assists in positioning the location of the first terminal device communicates with the first terminal device through the sidelink in a positioning scenario, to be specific, when the first terminal device needs to be positioned based on a reference signal of a PC5 interface in the positioning scenario, the second network device sends the synchronization information of the second terminal device to the first terminal device, so that the first terminal device can accurately calculate the location information of the first terminal device.

With reference to the fourth aspect, in some implementations of the fourth aspect, that the second network device obtains first information includes: The second network device receives the first information from the second terminal device.

With reference to the fourth aspect, in some implementations of the fourth aspect, that the second network device obtains first information includes: The second network device receives the first information from a serving base station network device of the second terminal device.

With reference to the fourth aspect, in some implementations of the fourth aspect, the method further includes: The second network device sends a first request message to the second terminal device. The first request message is used to request the synchronization information of the second terminal device. The second network device receives a first request response message from the second terminal device. The first request response message includes the first information.

With reference to the fourth aspect, in some implementations of the fourth aspect, the method further includes: The second network device sends a second request message to the serving base station network device of the second terminal device. The second request message is used to request the synchronization information of the second terminal device. The second network device receives a second request response message from the serving base station network device of the second terminal device. The second request response message includes the first information.

With reference to the fourth aspect, in some implementations of the fourth aspect, the method further includes: The second network device sends a fourth request message to a serving base station network device of the second terminal device. The fourth request message is used to request to configure configuration information of a sidelink reference signal of the second terminal device. The configuration information of the sidelink reference signal of the second terminal device is used by the first terminal device to receive the sidelink reference signal of the second terminal device. The second network device receives a fourth request response message from the serving base station network device of the second terminal device. The fourth request response message includes the configuration information of the sidelink reference signal of the second terminal device. The fourth request response message includes the first information.

With reference to the fourth aspect, in some implementations of the fourth aspect, the method further includes: The second network device sends a first configuration message to the first terminal device. The first configuration message includes configuration information of a sidelink reference signal of the second terminal device. The configuration information of the sidelink reference signal of the second terminal device is used by the first terminal device to receive the sidelink reference signal of the second terminal device. The first configuration message further includes the first information.

With reference to the fourth aspect, in some implementations of the fourth aspect, the method further includes: The second network device receives a first message from the first terminal device. The first message includes an identifier of the second terminal device. The second network device sends first indication information to a third terminal device. The first indication information indicates the third terminal device not to send a reference signal to the first terminal device. The third terminal device is a terminal device other than the second terminal device in all terminal devices covered by all base station network devices that the second network device requests to assist in positioning a target terminal.

With reference to the fourth aspect, in some implementations of the fourth aspect, the second terminal device is one or more terminal devices.

According to a fifth aspect, a positioning method is provided. The method may be performed by a first network device, or may be performed by a component (for example, a chip or a circuit) of the first network device. This is not limited. For ease of description, an example in which the method is performed by the first network device is used below for description.

The method may include: The first network device obtains first information. The first information includes synchronization information of a second terminal device. The first network device is a serving network device of the second terminal device. The synchronization information of the second terminal device includes synchronization information between the second terminal device and a synchronization source of the second terminal device. The second terminal device is configured to assist in positioning a location of a first terminal device. The second terminal device communicates with the first terminal device through a sidelink. The first network device sends the first information to a second network device.

With reference to the fifth aspect, in some implementations of the fifth aspect, the method further includes: The first network device receives a second request message from the second network device. The second request message is used to request the synchronization information of the second terminal device. The first network device sends a second request response message to the second network device. The second request response message includes the first information.

With reference to the fifth aspect, in some implementations of the fifth aspect, the method further includes: The first network device receives a fourth request message from the second network device. The fourth request message is used to request to configure configuration information of a sidelink reference signal of the second terminal device. The configuration information of the sidelink reference signal of the second terminal device is used by the first terminal device to receive the sidelink reference signal of the second terminal device. The first network device sends a fourth request response message to the second network device. The fourth request response message includes the configuration information of the sidelink reference signal of the second terminal device. The fourth request response message further includes the first information.

With reference to the fifth aspect, in some implementations of the fifth aspect, the method further includes: The first network device sends a second message to the second terminal device. The second message includes the configuration information of the sidelink reference signal of the second terminal device.

With reference to the fifth aspect, in some implementations of the fifth aspect, the method further includes: The first network device sends a fifth request message to the second terminal device. The fifth request message is used to request the configuration information of the sidelink reference signal of the second terminal device. The first network device receives a fifth request response message from the second terminal device. The fifth request response message includes the configuration information of the sidelink reference signal of the second terminal device.

With reference to the fifth aspect, in some implementations of the fifth aspect, the second terminal device is one or more terminal devices.

According to a sixth aspect, a positioning method is provided. The method may be performed by a second terminal device, or may be performed by a component (for example, a chip or a circuit) of the second terminal device. This is not limited. For ease of description, an example in which the method is performed by the second terminal device is used below for description.

The method may include: The second terminal device determines synchronization information of the second terminal device. The synchronization information of the second terminal device includes synchronization information between the second terminal device and a synchronization source of the second terminal device. The second terminal device sends first information to a first device. The first information includes the synchronization information of the second terminal device. The second terminal device is configured to assist in positioning a location of a first terminal device. The second terminal device communicates with the first terminal device through a sidelink. The first device is the first terminal device or a second network device.

With reference to the sixth aspect, in some implementations of the sixth aspect, when the first device is the second network device, the method further includes: The second terminal device receives a first request message from the first device. The first request message is used to request the synchronization information of the second terminal device. The second terminal device sends a first request response message to the first device. The first request response message includes the first information.

With reference to the sixth aspect, in some implementations of the sixth aspect, when the first device is the first terminal device, the method further includes: The second terminal device sends a second configuration message to the first device. The second configuration message includes configuration information of a sidelink reference signal of the second terminal device. The configuration information of the sidelink reference signal of the second terminal device is used by the first terminal device to receive the sidelink reference signal of the second terminal device. The second configuration message further includes the first information.

With reference to the sixth aspect, in some implementations of the sixth aspect, the method further includes: The second terminal device receives a second message from a serving network device of the second terminal device. The second message includes the configuration information of the sidelink reference signal of the second terminal device.

With reference to the sixth aspect, in some implementations of the sixth aspect, the method further includes: The second terminal device receives a fifth request message from a serving network device of the second terminal device. The fifth request message is used to request the configuration information of the sidelink reference signal of the second terminal device. The second terminal device sends a fifth request response message to the serving network device of the second terminal device. The fifth request response message includes the configuration information of the sidelink reference signal of the second terminal device.

With reference to the first aspect to the sixth aspect, in some implementations, the synchronization source of the second terminal device is the serving base station network device of the second terminal device, and the synchronization information is a time difference between a subframe boundary of the second terminal device and a subframe boundary of the serving base station network device of the second terminal device.

With reference to the first aspect to the sixth aspect, in some implementations, the synchronization source of the second terminal device is a global navigation satellite system GNSS, and the synchronization information is a direct frame number offset offsetDFN of the second terminal device.

According to a seventh aspect, a communication apparatus is provided. The apparatus is configured to perform the method according to the first aspect or the third aspect. Specifically, the apparatus may include units and/or modules, for example, a processing unit and/or a communication unit, configured to perform the method according to any one of the first aspect, the third aspect, or the possible implementations of the first aspect or the third aspect.

In an implementation, the apparatus is a first terminal device. When the apparatus is the first terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first terminal device. When the apparatus is the chip, the chip system, or the circuit used in the first terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like. It may be understood that when the apparatus is the chip, the chip system, or the circuit used in the first terminal device, the first terminal device in the method according to any one of the first aspect, the third aspect, or the possible implementations of the first aspect or the third aspect is the apparatus.

According to an eighth aspect, a communication apparatus is provided. The apparatus is configured to perform the method according to the second aspect or the fourth aspect. Specifically, the apparatus may include units and/or modules, for example, a processing unit and/or a communication unit, configured to perform the method according to any one of the second aspect, the fourth aspect, or the possible implementations of the second aspect or the fourth aspect.

In an implementation, the apparatus is a second network device. When the apparatus is a second network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second network device. When the apparatus is the chip, the chip system, or the circuit used in the second network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like. It may be understood that when the apparatus is the chip, the chip system, or the circuit used in the second network device, the second network device in the method according to any one of the second aspect, the fourth aspect, or the possible implementations of the second aspect or the fourth aspect is the apparatus.

According to a ninth aspect, a communication apparatus is provided. The apparatus is configured to perform the method according to the fifth aspect. Specifically, the apparatus may include units and/or modules, for example, a processing unit and/or a communication unit, configured to perform the method according to any one of the fifth aspect and the possible implementations of the fifth aspect.

In an implementation, the apparatus is a first network device. When the apparatus is a first network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first network device. When the apparatus is the chip, the chip system, or the circuit used in the first network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like. It may be understood that when the apparatus is the chip, the chip system, or the circuit used in the first network device, the first network device in the method according to any one of the fifth aspect and the possible implementations of the fifth aspect is the apparatus.

According to a tenth aspect, a communication apparatus is provided. The apparatus is configured to perform the method according to the sixth aspect. Specifically, the apparatus may include units and/or modules, for example, a processing unit and/or a communication unit, configured to perform the method according to any one of the sixth aspect and the possible implementations of the sixth aspect.

In an implementation, the apparatus is a second terminal device. When the apparatus is the second terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the second terminal device. When the apparatus is the chip, the chip system, or the circuit used in the second terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like. It may be understood that when the apparatus is the chip, the chip system, or the circuit used in the second terminal device, the second terminal device in the method according to any one of the sixth aspect and the possible implementations of the sixth aspect is the apparatus.

According to an eleventh aspect, this application provides a communication device, including at least one processor. The at least one processor is coupled to at least one memory. The at least one memory is configured to store a computer program or instructions. The at least one processor is configured to invoke the computer program or the instructions from the at least one memory and run the computer program or the instructions, to enable the communication device to perform the method according to any one of the first aspect, the third aspect, or the possible implementations of the first aspect or the third aspect.

According to a twelfth aspect, this application provides a communication device, including at least one processor. The at least one processor is coupled to at least one memory. The at least one memory is configured to store a computer program or instructions. The at least one processor is configured to invoke the computer program or the instructions from the at least one memory and run the computer program or the instructions, to enable the communication device to perform the method according to any one of the second aspect, the fourth aspect, or the possible implementations of the second aspect or the fourth aspect.

According to a thirteenth aspect, this application provides a communication device, including at least one processor. The at least one processor is coupled to at least one memory. The at least one memory is configured to store a computer program or instructions. The at least one processor is configured to invoke the computer program or the instructions from the at least one memory and run the computer program or the instructions, to enable the communication device to perform the method according to any one of the fifth aspect and the possible implementations of the fifth aspect.

According to a fourteenth aspect, this application provides a communication device, including at least one processor. The at least one processor is coupled to at least one memory. The at least one memory is configured to store a computer program or instructions. The at least one processor is configured to invoke the computer program or the instructions from the at least one memory and run the computer program or the instructions, to enable the communication device to perform the method according to any one of the sixth aspect and the possible implementations of the sixth aspect.

According to a fifteenth aspect, a computer-readable storage medium is provided. The computer-readable storage medium stores program code executed by a device. The program code is used to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, or the sixth aspect.

According to a sixteenth aspect, a computer program product including instructions is provided. When the computer program product runs on a computer, the computer is enabled to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, or the sixth aspect.

According to a seventeenth aspect, a chip is provided. The chip includes a processor and a communication interface. The processor reads, through the communication interface, instructions stored in a memory, to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, or the sixth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, or the sixth aspect.

According to an eighteenth aspect, a communication system is provided. The communication system includes one or more communication devices shown in the eleventh aspect to the fourteenth aspect.

## BRIEF DESCRIPTION OF DRAWINGS

FIG. 1 is a diagram of a wireless communication system 100 applicable to an embodiment of this application;

FIG. 2 is a diagram of a wireless communication system 200 applicable to an embodiment of this application;

FIG. 3 is a diagram of a DL-TDOA positioning method;

FIG. 4 is a schematic flowchart of a positioning method according to an embodiment of this application;

FIG. 5 is a schematic flowchart of obtaining configuration information of a sidelink reference signal of a second terminal device by a location management device and a first terminal device according to this application;

FIG. 6 is a schematic flowchart of calculating location information of a first terminal device by a location management device according to this application;

FIG. 7 is another schematic flowchart of calculating location information of a first terminal device by a location management device according to this application;

FIG. 8 is a schematic flowchart of a positioning method according to an embodiment of this application;

FIG. 9 is a schematic flowchart of calculating location information of a first terminal device by the first terminal device according to this application;

FIG. 10 is another schematic flowchart of calculating location information of a first terminal device by the first terminal device according to this application;

FIG. 11 is a schematic block of a communication apparatus 1000 according to this application; and

FIG. 12 is a diagram of a structure of a communication apparatus 10 according to this application.

## DESCRIPTION OF EMBODIMENTS

To make objectives, technical solutions, and advantages of embodiments of this application clearer, the following further describes embodiments of this application in detail with reference to the accompanying drawings.

The technical solutions of this application may be applied to a scenario in which a terminal device needs to be positioned. For example, the technical solutions may be applied to a positioning scenario in which a time difference of arrival (time difference of arrival, TDOA), a downlink time difference of arrival (downlink time difference of arrival, DL-TDOA), an uplink time difference of arrival (uplink time difference of arrival, UL-TDOA), an enhanced cell identifier (enhanced cell identifier, E-CID), or a multi round trip time (multi round trip time, multi-RTT) technology is used.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a future communication system, and a vehicle-to-everything (vehicle-to-X V2X) system. The V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), long term evolution-vehicle (long term evolution-vehicle, LTE-V), an internet of vehicles, machine type communication (machine type communication, MTC), internet of things (internet of things, IoT), long term evolution-machine (long term evolution-machine, LTE-M), machine-to-machine (machine-to-machine, M2M), and the like.

A terminal device in the embodiments of this application may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a sounding device, a terminal device in a future 5G network, a terminal device in a future evolved public land mobile network (Public Land Mobile Network, PLMN), or the like. This is not limited in embodiments of this application.

Alternatively, the terminal device in this application may be a road side unit (road side unit, RSU). The RSU is a facility deployed on the roadside in a vehicle-mounted delay tolerant network for auxiliary communication, and is directly connected to a backbone network and can perform wireless communication with a vehicle. Compared with a vehicle in the vehicle-mounted delay tolerant network, the RSU has a better communication capability, larger coverage, and a higher transmission speed, and can communicate with a plurality of vehicles at the same time. In addition, the RSU has large storage space to store information, to improve a communication probability. Therefore, by deploying a related RSU in a road traffic system, an existing vehicle-mounted Internet access problem can be effectively resolved, and a communication opportunity between vehicles can be greatly increased. A message is cached by the RSU, implementing efficient message transmission between vehicles.

For example, the terminal device may include a radio resource control (radio resource control, RRC) signaling interaction module, a media access control (media access control, MAC) signaling interaction module, and a physical (physical, PHY) signaling interaction module. The RRC signaling interaction module may be modules, configured to receive and send RRC signaling, of a network device and a terminal device. The MAC signaling interaction module may be modules, configured to receive and send media access control control element (media access control control element, MAC-CE) signaling, of the network device and the terminal device. PHY signaling interworking module may be modules, configured to send and receive uplink control signaling, downlink control signaling, uplink data, or downlink data, of the network device and the terminal device.

The network device in embodiments of this application may be a device configured to communicate with the terminal device. The network device includes but is not limited to a base transceiver station (base transceiver station, BTS) in a global system for mobile communications (global system for mobile communications, GSM) or a code division multiple access (code division multiple access, CDMA) system; or may be a NodeB (NodeB, NB) in a wideband code division multiple access (wideband code division multiple access, WCDMA) system; or may be an evolved NodeB (evolved NodeB, eNB or eNodeB) in an LTE system; or may be a radio controller in a cloud radio access network (cloud radio access network, CRAN) scenario; or may be a radio network controller (radio network controller, RNC), a base station controller (base station controller, BSC), a home base station (for example, a home evolved NodeB or a home NodeB, HNB), or a baseband unit (baseband unit, BBU). Alternatively, the network device may be a relay station, an access point, a vehicle-mounted device, a wearable device, a network device in a 5G network, a network device in a future evolved PLMN network, or the like; or may be an access point (access point, AP) in a WLAN, a wireless relay node, a wireless backhaul node, a transmission point (transmission point, TP), a transmission reception point (transmission reception point, TRP), or the like; or may be a gNB or a transmission point (TRP or TP) in a new radio (new radio, NR) system or one or a group of (including a plurality of antenna panels) antenna panels of a base station in a 5G system; or may be a network node included in the gNB or the transmission point. This is not limited in embodiments of this application.

In some deployments, the gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

For ease of understanding embodiments of this application, a communication system that may be used in embodiments of this application is first described.

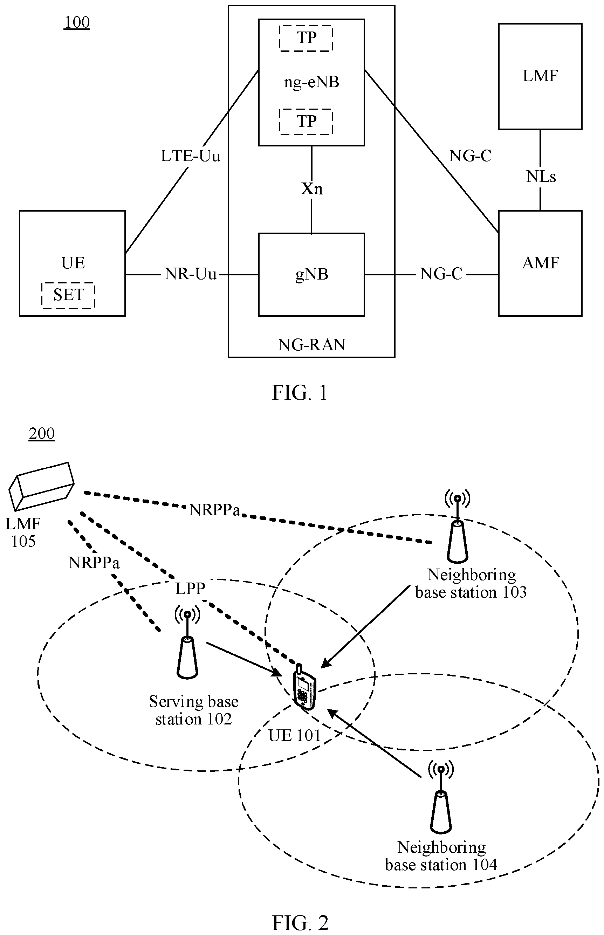

FIG. 1 is a diagram of a wireless communication system 100 applicable to an embodiment of this application. The communication system 100 includes a terminal device (represented as a UE in FIG. 1), a radio access network (represented as a next generation radio access network (next generation radio access network, NG-RAN) in FIG. 1), and a core network.

The radio access network includes one or more next generation evolved NodeBs (next generation evolved NodeBs, ng-eNBs) and gNBs. The ng-eNB represents an LTE base station that accesses a 5G core network, and the gNB represents a 5G base station that accesses the 5G core network. Communication between an ng-eNB and a gNB, two ng-eNBs, or two gNBs is performed through an Xn interface. The Xn interface may also be referred to as an XnAP interface. The radio access network is connected to the core network through an NG-C interface.

The core network includes other functions such as an access and mobility management function (access and mobility management function, AMF) and a location management function (location management function, LMF).

The LMF is responsible for supporting different types of location services related to the UE, including positioning the UE and transferring assistance data to the UE. The LMF may perform signal interaction with the UE and the RAN, for example, the ng-eNB or the gNB. For example, the LMF performs information interaction with the ng-eNB or the gNB through a new radio positioning protocol annex (new radio positioning protocol annex, NRPPa) message, for example, obtaining a reference signal (positioning reference signal, PRS), configuration information of a sounding reference signal (sounding reference signal, SRS), cell timing, cell location information, and the like. For another example, UE capability information, assistance information, measurement information, and the like are transferred between the LMF and the UE through an LTE positioning protocol (LTE positioning protocol, LPP) message.

The AMF entity may receive a location service request related to the UE from a location service (location service, LCS) entity of the 5G core network (5G core, 5GC). Alternatively, the AMF may start some location services on behalf of a specific UE, and forward a location service request to the LMF.

The terminal device is connected to the radio access network via the ng-eNB through an LTE-Uu interface. The terminal device may alternatively be connected to the radio access network via the gNB through an NR-Uu interface.

It should be understood that the communication system 100 may include one or more base stations (including the ng-eNB or the gNB). It should be further understood that the communication system 100 may include one or more terminal devices, for example, one or more terminal device groups (for example, a UE set shown in FIG. 1). One gNB may send data or control signaling to one or more terminal devices. A plurality of gNBs may send data or control signaling to one terminal device at the same time.

Optionally, the ng-eNB and the gNB in FIG. 1 may also be replaced with a TRP, a TP, a reception point (reception point, RP), a cell, and the like.

FIG. 2 is a diagram of a wireless communication system 200 applicable to an embodiment of this application. As shown in FIG. 2, the wireless communication system 200 may include at least one terminal device, for example, a UE 101 shown in FIG. 2. The wireless communication system 200 may further include a plurality of network devices (where for example, the network devices may be base stations (base stations, BSs) or TRPs, and the base stations are used as an example below). The plurality of base stations include a base station of a serving cell of the terminal device 101 and base stations of one or more neighboring cells of the serving cell. The base station of the serving cell (which may also be referred to as a serving base station) is 102 shown in FIG. 2, and the base stations of the neighboring cells (which may also be referred to as neighboring base stations) are 103 and 104 shown in FIG. 2. A plurality of antennas may be configured for both the network device and the terminal device, and the network device may communicate with the terminal device by using a multi-antenna technology.

Optionally, a base station in FIG. 2 may be replaced with a TRP, a TP, an RP, a cell, or the like.

In addition to the network devices and the terminal device, the wireless communication system 200 may further include an LMF network element 105. The LMF network element 105 may be configured to estimate a location of the terminal device. The LMF network element 105 may be deployed inside a core network, that is, the LMF network element 105 is also a core network element. The LMF network element 105 may communicate with the network device via an AMF network element (not shown in the figure). For ease of description, in embodiments of this application, sending of information to the network device by the LMF network element through the AMF network element is referred to as sending of information to the network device by the LMF network element for short. In other words, that the LMF network element sends a message to the network device in embodiments of this application may be understood as that the LMF network element first sends information to the AMF network element and the AMF network element forwards the information to the network device. Optionally, if there is an interface between the LMF network element and the network device, the LMF network element may directly send the information to the network device.

In some embodiments, some functions of the LMF network element 105, for example, a location management component (location management component, LMC), may be integrated in the network device. For example, the base station 102 of the serving cell and the base stations 103 and 104 of the two neighboring cells are each integrated with the LMC. That the LMC of the LMF network element integrated in the network device sends information to the network device may also be considered as that the LMF network element sends the information to the network device.

It should be noted that the architecture of the communication system shown in FIG. 2 is merely used as an example, and use of another architecture is not limited. For example, the base station 102 of the serving cell and the base stations 103 and 104 of the two neighboring cells are shown in FIG. 2. It is clear that the communication system 200 may further include base stations of more neighboring cells.

In the communication system 100 and the communication system 200, the LMF network element communicates with the base station according to an NRPPa protocol. The LMF network element communicates with the UE according to an LPP protocol. The LMF performs cell information interaction with the base station according to the NRPPa protocol, for example, configuration information of a reference signal of a cell, cell timing information, and geographical location information of the cell. The UE capability information, the assistance information, the measurement information, and the like are transferred between the LMF and the UE according to the LPP protocol.

The following describes some terms or concepts in embodiments of this application, to facilitate understanding of a person skilled in the art.

1. Uu interface (cellular communication interface)

The interface is a communication interface between a terminal and a base station. Uu communication requires participation of the base station and cellular network coverage. The interface is characterized by long-distance and large-scale reliable communication. A PC5 interface and the Uu interface can coexist.

2. PC5 interface (direct communication interface)

The interface is a communication interface between terminals, to be specific, a short-distance direct communication interface between a vehicle, a person, and a road infrastructure. PC5 communication does not require cellular network coverage and can be used for point-to-point communication. The interface is characterized by low-latency, high-capacity, and highly-reliable communication through direct connection, broadcast, and network scheduling.

It should be understood that, different from a downlink (downlink, DL) and an uplink (uplink, UL) in a common Uu interface, a direct communication link used in the PC5 interface is referred to as a sidelink (sidelink, SL).

3. RRC mode

There are three RRC modes in NR: RRC idle mode (RRC_IDLE), RRC inactive mode (RRC_INACTIVE), and RRC connected mode (RRC_CONNECTED). The following briefly describes the three RRC modes.

① RRC_CONNECTED (RRC connected mode): A RAN has a context of a UE, and there is a signaling connection between the UE and the RAN. The UE may receive a message and a system message that are delivered by the RAN to control the UE to perform data transmission and handover and notify the UE of related scheduling information. The RAN may receive channel quality information fed back by the UE.

② RRC_INACTIVE (RRC inactive mode): The RAN maintains a connection with a core network, and no resource is allocated to an air interface, so that a service can be quickly restored, to improve latency-sensitive application experience. In addition, a power saving effect of a user in inactive mode is close to that in idle mode, to prolong a battery life of a mobile phone.

③ RRC_IDLE (RRC idle mode): The RAN does not have the context of the UE, and there is no signaling connection between the UE and the RAN. In this mode, the UE can receive a system message and a paging message for cell selection and reselection. When the UE needs to establish a connection to a network for a purpose (a service request, location update, paging, or the like), the UE triggers RRC connection establishment. After an RRC connection is established, the UE enters the RRC connected mode.

It should be understood that an RRC non-connected mode in this application may be the RRC idle mode and/or the RRC inactive mode. The RRC non-connected mode in this application may be replaced with the RRC idle mode and/or the RRC inactive mode.

4. TP: A set of geographically co-located transmit antennas (for example, an antenna array with one or more antenna elements) for one cell, a part of one cell, or one DL positioning reference signal (positioning reference signal, PRS)-only TP. The transmission point may include a base station (ng-eNB or gNB) antenna, a remote radio head, a remote antenna of a base station, an antenna of the DL-PRS-only TP, and the like. One cell may include one or more transmission points. For a homogeneous deployment, each transmission point may correspond to one cell.

5. TRP: A set of geographically co-located antennas (for example, an antenna array with one or more antenna elements) supporting a TP function and/or an RP function.

6. RP: A set of geographically co-located receive antennas (for example, an antenna array with one or more antenna elements) for one cell, a part of one cell, or one UL sounding reference signal (sounding reference signal, SRS)-only RP. The reception point may include a base station (ng-eNB or gNB) antenna, a remote radio head, a remote antenna of a base station, an antenna of the UL-SRS-only RP, and the like. One cell may include one or more reception points. For a homogeneous deployment, each reception point may correspond to one cell.

Positioning is an important function in a mobile communication system, and requires the system to provide location information of a user in real time. Currently, a target UE (target UE) may be positioned by using a positioning technology, so that a positioning initiator that initiates a positioning service obtains location information of the target UE. The positioning initiator may be an LCS, a UE, an AMF network element, or the like. For example, the LCS requests a serving AMF of the target UE to position the target UE; or a serving AMF of the target UE decides to position the target UE; or the target UE requests a positioning service from a serving AMF of the target UE, for example, initiates the request due to positioning or transmission of assistance information. After the positioning service is triggered, an LMF further performs a positioning-related operation. The LMF needs to perform interaction with the base station, for example, obtaining assistance information related to air interface positioning. The LMF further needs to perform interaction with the target UE, for example, a capability transmission procedure, including obtaining a positioning capability of the UE, providing positioning-related assistance information for the UE, and the like.

In existing Uu interface positioning, the target UE may send and/or receive a Uu interface-based positioning-related reference signal for positioning, and the target UE is positioned by using a positioning method supported in NR and LTE. For example, the Uu interface-based positioning-related reference signal includes a PRS and/or an SRS. The PRS is a downlink signal, and the SRS is an uplink signal.

For example, a common positioning method for a cellular network is a TDOA. The TDOA includes a downlink time difference of arrival (downlink time difference of arrival, DL-TDOA) positioning method and an uplink time difference of arrival (uplink time difference of arrival, UL-TDOA) positioning method. By using the DL-TDOA and the UL-TDOA, the target UE may be positioned by the communication system shown in FIG. 1 or FIG. 2. It should be noted that the TDOA requires high time synchronization between base stations that assist in positioning the target UE.

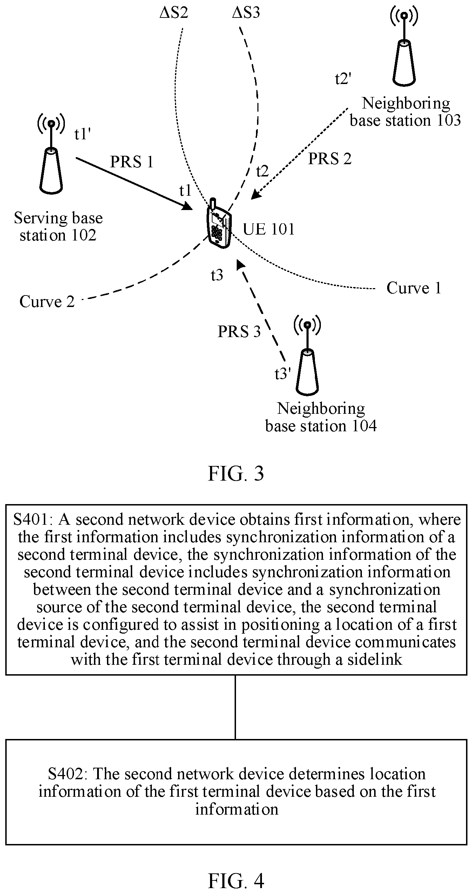

The following describes the DL-TDOA positioning method in detail with reference to FIG. 3. Optionally, a base station in FIG. 3 may be replaced with a TRP, a TP, an RP, a cell, or the like. A principle of the DL-TDOA is that a target UE receives downlink signals (for example, PRSs) from a plurality of TPs, and the target UE measures, by using assistance data (assistance data) received from an LMF, a DL RSTD (reference signal time difference, reference signal time difference) between the PRSs sent by the plurality of TPs, and calculates location information of the target UE based on the DL RSTD. The plurality of TPs include one reference TP. For example, the reference TP corresponds to a serving base station of the target UE. In addition to the reference TP, the plurality of TPs further include at least two neighboring TPs. It may be understood that the DL RSTD is a downlink relative timing difference (DL relative timing difference) between a neighboring TP and the reference TP. The downlink relative timing difference may be defined as time A minus time B. The time A is time when the target UE receives a start of one subframe from the neighboring TP. The time B is time when the target UE receives a corresponding start of one subframe from the reference TP, where the subframe is closest in time to the subframe received from the neighboring TP.

FIG. 3 is a diagram of the DL-TDOA positioning method. An example is shown in FIG. 3. In a process of positioning the target UE (namely, a UE 101) by using the DL-TDOA, a serving base station 102 sends a PRS 1 to the UE 101 at t1', and the UE 101 receives the PRS 1 at a moment t1. A neighboring base station 103 sends a PRS 2 to the UE 101 at t2', and the UE 101 receives the PRS 2 at a moment t2. A neighboring base station 104 sends a PRS 3 to the UE 101 at t3', and the UE 101 receives the PRS 3 at a moment t3. In FIG. 3, a difference between distances from any point on a curve 1 to the serving base station 102 and the neighboring base station 103 is a fixed value $\Delta S2$, a difference between distances from any point on a curve 2 to the serving base station 102 and the neighboring base station 104 is a fixed value $\Delta S3$, and an intersection point of the curve 1 and the curve 2 is a location of the UE 101.

The following Formula (1) and Formula (2) may be obtained from FIG. 3:

$$\Delta S2=(t2-t2')*c-(t1-t1')*c=\{(t2-t1)-(t2'-t1')\}*c=\{RSTD_{1,\,2}-(t2'-t1')\}*c \ (1)$$

$$\Delta S3=(t3-t3')*c-(t1-t1')*c=\{(t3-t1)-(t3'-t1')\}*c=\{RSTD_{1,\,3}-(t3'-t1')\}*c \ (2)$$

As long as $\Delta S2$ and $\Delta S3$ can be obtained according to the foregoing formulas, the location information of the UE 101 can be calculated.

It may be understood that, in a scenario shown in FIG. 3, both the neighboring base station 103 and the neighboring base station 104 are neighboring TPs, and the serving base station 102 is a reference TP. $RSTD_{1,\,2}$ represents a DL RSTD between the PRSs sent by the serving base station 102 and the neighboring base station 103, and $RSTD_{1,\,3}$ represents a DL RSTD between the PRSs sent by the serving base station 102 and the neighboring base station 104.

Optionally, in a current positioning technology, the LMF may calculate the location information of the target UE. This may be referred to as LMF-based or UE-assisted. As shown in FIG. 3, if the LMF-based is used, the target UE and/or the base station need/needs to report, to the LMF, the DL RSTD between the PRSs received by the target UE from the plurality of base stations, and the LMF calculates the location information of the target UE based on the DL RSTD reported by the UE and/or the base station.

Optionally, the target UE may also calculate the location information of the target UE. This may be referred to as UE-based. As shown in FIG. 3, if the UE-based is used, the target UE may calculate the location information of the target UE based on the DL RSTD between the PRSs received from the plurality of base stations.

In some embodiments, when the LMF or the target UE calculates the location information of the target UE, the RSTD in the foregoing Formula (1) and Formula (2) may also be determined by a receiving subframe boundary difference between each neighboring TP and the reference TP. For example, the receiving subframe boundary difference is the RSTD. The receiving subframe boundary difference may be understood as a subframe boundary difference between the plurality of TPs on the target UE side, or may be understood as a subframe boundary difference between the plurality of TPs. For example, for a manner of calculating the receiving subframe boundary difference, refer to the foregoing manner of calculating the DL RSTD, for example, time when the target UE receives a start of one subframe from the neighboring TP minus time when the target UE receives a corresponding start of one subframe from the reference TP, where the subframe is closest in time to the subframe received from the neighboring TP.

In some embodiments, when the LMF or the UE calculates the location information of the target UE, a PRS sending time difference in the foregoing Formula (1) and Formula (2) may be represented by a sending subframe boundary difference between each neighboring TP and the reference TP. For example, the sending subframe boundary difference is the PRS sending time difference. The sending subframe boundary difference may also be understood as a subframe boundary difference between the plurality of TPs. For example, for a manner of calculating the sending subframe boundary difference, refer to the foregoing manner of calculating the DL RSTD, for example, time when the neighboring TP sends a start of one subframe to the target UE minus time when the reference TP sends a corresponding start of one subframe to the target UE, where the subframe is closest in time to the subframe sent by the neighboring TP.

In some embodiments, the subframe boundary difference may be replaced with a frame boundary difference. It may be understood that the boundary difference may be replaced with a time difference between boundaries.

For example, when the LMF-based is used, $RSTD_{1,2}$ in Formula (1) may be reported by the UE 101 to the LMF, t1' may be determined by the LMF based on configuration information of the PRS 1 of the serving base station 102, and t2' may be determined by the LMF based on configuration information of the PRS 2 of the neighboring base station 103; or t1' is a subframe boundary of the serving base station 102, and t2' is a subframe boundary of the neighboring base station 103, that is, t2'-t1' may be obtained based on a difference between the subframe boundaries of the neighboring base station 103 and the serving base station 102. Similarly, when the LMF-based is used, $RSTD_{1,3}$ in Formula (2) may be reported by the UE 101 to the LMF, t1' may be obtained by the LMF from the configuration information of the PRS 1 of the serving base station 102, and t3' may be obtained by the LMF from configuration information of the PRS 3 of the neighboring base station 104; or t1' is the subframe boundary of the serving base station 102, and t3' is a subframe boundary of the neighboring base station 104, that is, t3'-t1' may be obtained based on a difference between the subframe boundaries of the neighboring base station 104 and the serving base station 102.

For example, when the UE-based is used, $RSTD_{1,2}$ in Formula (1) may be obtained by the UE through measurement, t1' may be determined by the UE 101 based on configuration information of the PRS 1 that is sent by the LMF, and t2' may be determined by the UE 101 based on configuration information of the PRS 2 that is sent by the LMF; or t1' is a subframe boundary of the serving base station 102, t2' is a subframe boundary of the neighboring base station 103, and t2'-t1' may be obtained based on a difference between the subframe boundaries of the serving base station 102 and the neighboring base station 103. Similarly, when the UE-based is used, $RSTD_{1,3}$ in Formula (2) may be obtained by the UE 101 through measurement, t1' may be determined by the UE based on the configuration information of the PRS 1 that is sent by the LMF, and t3' may be determined by the UE 101 based on configuration information of the PRS 3 that is sent by the LMF; or t1' is the subframe boundary of the serving base station 102, t3' is a subframe boundary of the neighboring base station 104, and t3'-t1' may be obtained based on a difference between the subframe boundaries of the serving base station 102 and the neighboring base station 104.

In addition, a principle of the UL-TDOA positioning method is to calculate the location information of the target UE based on a UL relative time of arrival (relative time of arrival, RTOA) of an uplink signal (for example, an SRS) sent by the target UE to a plurality of RPs. The UL-RTOA is a beginning of a subframe including the uplink signal received at the RP relative to an RTOA. The RP measures the UL-RTOA of the received signal (for example, the SRS) by using assistance data obtained from a location server. In other words, the LMF calculates the location information of the UE based on a time difference between receiving, by the plurality of RPs, the SRS sent by the UE. For specific descriptions of the UL-TDOA positioning method, details are not described.

A current positioning method is mainly used to perform positioning based on a reference signal of a Uu interface. When a sidelink is used in a Uu interface-based positioning scenario, to be specific, at least one network element, terminal, or entity (for example, a road side unit (road side unit, RSU)) that can send a reference signal of a PC5 interface is used in the positioning scenario, the target UE needs to be positioned based on the reference signal of the Uu interface and the sidelink reference signal of the PC5 interface in the positioning scenario, or the target UE needs to be positioned based only on the sidelink reference signal of the PC5 interface in the positioning scenario. However, because sending and receiving of the sidelink reference signal of the PC5 interface are different from sending and receiving of the reference signal of the Uu interface, the LMF or the target UE cannot accurately obtain the location information of the target UE through calculation. For ease of understanding, an example is used herein for description. In the DL-TDOA positioning scenario shown in FIG. 3, the neighboring base station 104 is replaced with the RSU, and the RSU may send the sidelink reference signal of the PC5 interface (where an example in which the sidelink reference signal of the PC5 interface is an SL-PRS is used below). In this case, in the DL-TDOA positioning scenario shown in FIG. 3, the UE 101 needs to be positioned based on the reference signal of the Uu interface and the sidelink reference signal of the PC5 interface. Because a manner of determining, by the LMF or the UE 101, the time (namely, t3') for sending the PRS 3 by the neighboring base station 104 is different from a manner of determining sending time for sending the SL-PRS by the RSU, the LMF or the UE 101 cannot accurately obtain the location information of the UE 101 through calculation.

In view of this, this application provides a positioning method, to effectively resolve the foregoing technical problem. It can be learned from the foregoing descriptions that the location information of the target UE may be calculated by the target UE, or may be calculated by the LMF. The following describes in detail processes in which the target UE and the LMF position the target UE with reference to the accompanying drawings.

FIG. 4 is a schematic flowchart of a positioning method according to an embodiment of this application. In this method, an LMF calculates location information of a target UE. The method may include the following steps.

S401: A second network device obtains first information, where the first information includes synchronization information of a second terminal device, the synchronization information of the second terminal device includes synchronization information between the second terminal device and a synchronization source of the second terminal device, the second terminal device is configured to assist in positioning a location of a first terminal device, and the second terminal device communicates with the first terminal device through a sidelink.

The second network device in this embodiment of this application is a device having a location management function. For example, the second network device may be a part of a core network, or may be integrated into a network device. For example, the second network device may be the LMF shown in FIG. 1 or FIG. 2, or a location management component (location management component, LMC) in a serving network device of a to-be-positioned terminal device. The second network device may also be referred to as a location management device or a location center. A name of the location management device is not limited in this application. In a future evolved technology, the location management device may also be assigned another name. In all embodiments of this application, an example in which the second network device is a location management device is used for description.

It may be understood that the first terminal device is the target UE. For example, in the positioning scenario shown in FIG. 2 or FIG. 3, the first terminal device may be considered as the UE 101, the second terminal device may be considered as the RSU, and the location management device may be considered as the LMF 105.

It should be understood that, one or more second terminal devices that assist in positioning the location of the first terminal device may be included in a scenario. This is not limited in this application. That the second terminal device is configured to assist in positioning a location of a first terminal device may be understood as that the first terminal device receives a sidelink reference signal from the second terminal device, and/or the first terminal device sends a sidelink reference signal to the second terminal device to assist the location management device in positioning the location of the first terminal device.

Optionally, when the synchronization source of the second terminal device is a serving network device of the second terminal device, the synchronization information of the second terminal device includes a time difference between a subframe boundary of the second terminal device and a subframe boundary of the serving network device of the second terminal device.

For example, the time difference between the subframe boundary of the second terminal device and the subframe boundary of the serving network device of the second terminal device may be a time difference between a downlink subframe boundary of the second terminal device and a downlink subframe boundary of the serving network device of the second terminal device, or may be a time difference between an uplink subframe boundary of the second terminal device and an uplink subframe boundary of the serving network device of the second terminal device.

For example, for a manner of calculating the time difference between the subframe boundaries, refer to the foregoing manner of calculating the DL RSTD. For example, the time difference between the subframe boundary of the second terminal device and the subframe boundary of the serving network device of the second terminal device includes timing advance (timing advance, TA) information of the second terminal device. For example, the synchronization information of the second terminal device is TA/2.

Optionally, when the synchronization source of the second terminal device is a serving network device of the second terminal device, the synchronization information of the second terminal device includes a time difference between a subframe boundary of the second terminal device and a subframe boundary of the serving network device of the second terminal device.

For example, the synchronization information of the second terminal device may be determined by a distance between the second terminal device and the serving network device of the second terminal device. For example, information about the distance between the second terminal device and the serving network device of the second terminal device, location information of the second terminal device, or the like is determined by using a positioning method between the second terminal device and the serving network device of the second terminal device. The positioning method may be any positioning method such as a multi-cell round trip time (multi-cell round trip time, Multi-RTT), a UL-TDOA, or a DL-TDOA. The synchronization information of the second terminal device may be obtained based on the information about the distance between the second terminal device and the serving network device of the second terminal device, the location information of the second terminal device, or the like.

Optionally, when the synchronization source of the second terminal device is a global navigation satellite system (global navigation satellite system, GNSS), the synchronization information of the second terminal device includes a direct frame number (direct frame number, DFN) offset (offsetDFN) of the second terminal device.

Optionally, the location management device may obtain the first information by using any one of the following methods.

Method 1: The location management device receives the first information from the second terminal device.

Based on Method 1, in a possible specific implementation, that the location management device obtains the first information mainly includes the following steps.

(1) The location management device sends a first request message to the second terminal device. The first request message is used to request the synchronization information of the second terminal device. Correspondingly, the second terminal device receives the first request message from the location management device.

Optionally, in all embodiments of this application, that the first request message is used to request the synchronization information of the second terminal device may also be understood as that the first request message includes first request information, and the first request information is used to request the synchronization information of the second terminal device.

(2) In response to the received first request message, the second terminal device sends a first request response message to the location management device. The first request response message includes the first information. Correspondingly, the location management device receives the first request response message from the second terminal device.

Method 2: The location management device receives the first information from the serving network device of the second terminal device. It may be understood that, when the second terminal device is in RRC connected mode, the serving network device of the second terminal device knows the synchronization information of the second terminal device, and the location management device can obtain the first information from the serving network device of the second terminal device.

It should be understood that, when a plurality of second terminal devices are included in the positioning scenario, if serving network devices of the plurality of second terminal devices are not a same network device, the location management device receives first information from the serving network device corresponding to each second terminal device. That is, the location management device separately receives synchronization information of the plurality of second terminal devices from the plurality of network devices.

Based on Method 2, in a possible specific implementation, the serving network device of the second terminal device may report the first information based on a request of the location management device. For example, that the location management device obtains the first information mainly includes the following steps.

(1) The location management device sends a second request message to the serving network device of the second terminal device. The second request message is used to request the synchronization information of the second terminal device. Correspondingly, the serving network device of the second terminal device receives the second request message from the location management device.

Optionally, in all embodiments of this application, that the second request message is used to request the synchronization information of the second terminal device may also be understood as that the second request message includes second request information, and the second request information is used to request the synchronization information of the second terminal device.

(2) In response to the received second request message, the second terminal device sends a second request response message to the location management device. The second request response message includes the first information. Correspondingly, the location management device receives the second request response message from the serving network device of the second terminal device.

Based on Method 2, in another possible specific implementation, the serving network device of the second terminal device actively reports the first information to the location management device. For example, that the location management device obtains the first information mainly includes the following steps.

(1) The location management device sends a fourth request message to the serving network device of the second terminal device. The fourth request message is used to request to configure configuration information of the sidelink reference signal of the second terminal device. The configuration information of the sidelink reference signal of the second terminal device is used by the first terminal device to receive the sidelink reference signal of the second terminal device. Correspondingly, the serving network device of the second terminal device receives the fourth request message from the location management device.

Optionally, in all embodiments of this application, that the fourth request message is used to request to configure configuration information of the sidelink reference signal of the second terminal device may also be understood as that the fourth request message includes fourth request information, and the fourth request information is used to request to configure the configuration information of the sidelink reference signal of the second terminal device.

For example, the configuration information of the sidelink reference signal may include at least one of the following: a resource configuration of the sidelink reference signal, for example, a time domain resource or a frequency domain resource, and for another example, a 1st symbol in a slot, a quantity of symbols, a comb offset of the 1st symbol, and a slot offset of a 1st slot in a resource set; information such as a periodicity of the sidelink reference signal; a staggering pattern (Staggering pattern); a quantity of repetitions of the sidelink reference signal; and a muting (muting) configuration of the sidelink reference signal.

(2) **In** response to the received fourth request message, the serving network device of the second terminal device sends a fourth request response message to the location management device. The fourth request response message includes the configuration information of the sidelink reference signal of the second terminal device and the first information. Correspondingly, the location management device receives the fourth request response message from the serving network device of the second terminal device.

In other words, in this implementation, after the serving network device of the second terminal device receives the fourth request message, even if the location management device does not request the synchronization information of the second terminal device, based on a subsequent positioning requirement, the serving network device of the second terminal device may also directly send both the configuration information of the sidelink reference signal of the second terminal device and the synchronization information of the second terminal device to the location management device.

Optionally, the serving network device of the second terminal device may alternatively separately send the first information and the fourth request response message to the location management device. To be specific, the fourth request response message includes the configuration information of the sidelink reference signal of the second terminal device, and the first information is carried in another message.

Optionally, the location management device may also obtain the first information in another implementation or by using the method provided below. To be specific, after receiving the fourth request message, the serving network device of the second terminal device reports the configuration information of the sidelink reference signal of the second terminal device through the fourth request response message, but does not report the synchronization information of the second terminal device. This is not specifically limited in this application.

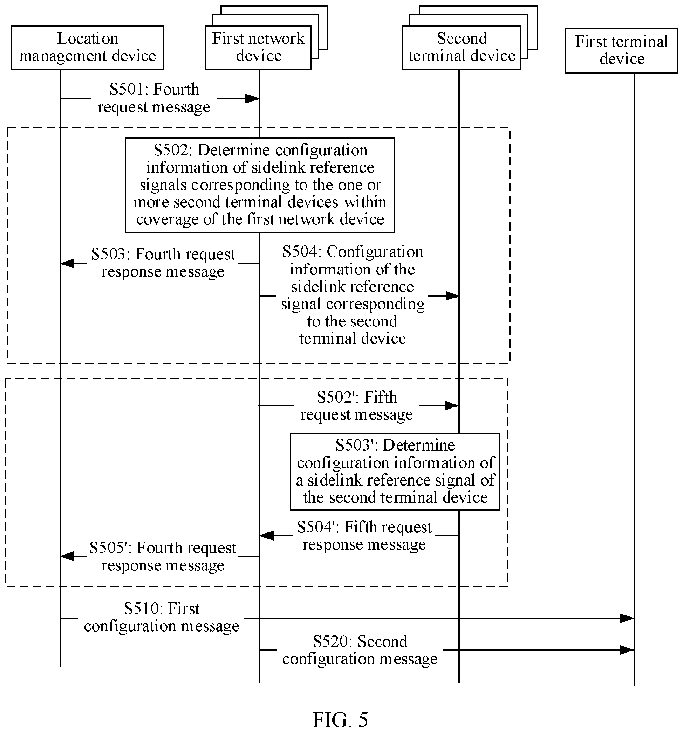

Optionally, in this implementation, the configuration information of the sidelink reference signal of the second terminal device that is included in the fourth request response message may be directly determined by the serving network device of the second terminal device, or may be determined by the second terminal device. The following provides descriptions with reference to FIG. 5.

FIG. 5 is a schematic flowchart of obtaining the configuration information of the sidelink reference signal of the second terminal device by the location management device according to this application. FIG. 5 includes procedures corresponding to a determining manner ① and a determining manner ②.

It should be understood that the method shown in FIG. 5 may be implemented independently, or may be combined with another solution in this application to form a new embodiment. This is not limited in this application.

① The serving network device of the second terminal device directly determines the configuration information of the sidelink reference signal of the second terminal device. For example, as shown in FIG. 5, the determining manner ① mainly includes the following steps.

S501: The location management device sends the fourth request message to a first network device. The first network device is a serving network device of the second terminal device. Correspondingly, the first network device receives the fourth request message from the location management device.

S502: In response to the received fourth request message, the first network device determines configuration information of sidelink reference signals of one or more second terminal devices within coverage of the first network device.

In some embodiments, if the location management device includes identifiers of one or more second terminal devices in the fourth request message, the first network device may determine configuration information of sidelink reference signals of the only one or more second terminal devices requested by the location management device.

In some embodiments, if the location management device does not indicate an identifier of a second terminal device in the fourth request message, the first network device determines the configuration information of the sidelink reference signal of each second terminal device within the coverage of the first network device.

S503: The first network device sends the fourth request response message to the location management device. The fourth request response message includes the configuration information of the sidelink reference signals corresponding to the one or more second terminal devices within the coverage of the first network device.

In some embodiments, if the location management device includes the identifiers of the one or more second terminal devices in the fourth request message, the fourth request response message includes the configuration information of the sidelink reference signals of the one or more second terminal devices requested by the location management device.

In some embodiments, if the location management device does not indicate an identifier of any second terminal device in the fourth request message, the fourth request response message includes the configuration information of the sidelink reference signal of all the second terminal devices within the coverage of the first network device.

S504: The first network device sends, to each of the one or more second terminal devices within the coverage of the first network device, the configuration information of the sidelink reference signal corresponding to the second terminal device.

In some embodiments, if configuration information of a sidelink reference signal of one second terminal device is determined in S503, the first network device sends a second message to the second terminal device. The second message includes the configuration information of the sidelink reference signal of the second terminal device.

In some embodiments, if the configuration information of the sidelink reference signals of the plurality of second terminal devices is determined in S503, the first network device separately sends a second message to one of the plurality of second terminal devices. The second message includes the configuration information of the sidelink reference signal of the second terminal device.

In some embodiments, if the configuration information of the sidelink reference signals of the plurality of second terminal devices is determined in S503, the first network device may alternatively send the configuration information of the sidelink reference signals of the plurality of second terminal devices to only one of the plurality of second terminal devices. For example, the first network device sends a second message to the second terminal device. The second message includes the configuration information of the sidelink reference signals of the plurality of second terminal devices. For example, the plurality of second terminal devices may be second terminal devices requested by the location management device in the fourth request message.

It should be understood that a sequence of S503 and S504 is not limited in this application.

② The second terminal device determines the configuration information of the sidelink reference signal of the second terminal device. For example, as shown in FIG. 5, the determining manner ② mainly includes the following steps.

S501: The location management device sends the fourth request message to a first network device. The first network device is a serving network device of the second terminal device. Correspondingly, the location management device receives the fourth request response message from the first network device.

S502': In response to the received fourth request message, the first network device sends a fifth request message to the second terminal device. The fifth request message is used to request the configuration information of the sidelink reference signal of the second terminal device. Correspondingly, the second terminal device receives the fifth request message from the first network device.

Optionally, in all embodiments of this application, that the fifth request message is used to request the configuration information of the sidelink reference signal of the second terminal device may also be understood as that the fifth request message includes fifth request information, and the fifth request information is used to request to configure the configuration information of the sidelink reference signal of the second terminal device.

In some embodiments, if the location management device includes identifiers of one or more second terminal devices in the fourth request message, the first network device may send the fifth request message to only the one or more second terminal devices requested by the location management device in the fourth request message.

In some embodiments, if the location management device does not indicate an identifier of a second terminal device in the fourth request message, the first network device may send the fifth request message to all second terminal devices within coverage of the first network device.

S503': In response to the received fifth request message, the second terminal device determines the configuration information of the sidelink reference signal of the second terminal device.

S504': The second terminal device sends a fifth request response message to the second terminal device. The fifth request response message includes the configuration information of the sidelink reference signal of the second terminal device. Correspondingly, the first network device receives the fifth request response message from the second terminal device.

S505': The first network device sends the fourth request response message to the location management device.

In some embodiments, if the location management device includes the identifiers of the one or more second terminal devices in the fourth request message, the fourth request response message includes the configuration information of the sidelink reference signals of the one or more second terminal devices requested by the location management device in the fourth request message.

It may be understood that, for a positioning solution in which the location management device or the UE performs calculation, the first terminal device needs to receive or send the sidelink reference signal based on the configuration information of the sidelink reference signal of the second terminal device. The foregoing describes how the location management device obtains the configuration information of the sidelink reference signal of the second terminal device. Herein, with reference to FIG. 5, how the first terminal device obtains the configuration information of the sidelink reference signal of the second terminal device is described.

Optionally, the first terminal device obtains the configuration information of the sidelink reference signal of the second terminal device from the location management device. Specifically, as shown in FIG. 5, in S510, the location management device sends a first configuration message to the first terminal device. The first configuration message includes the configuration information of the sidelink reference signal of the second terminal device. Correspondingly, the first terminal device receives the first configuration message from the location management device.

In some embodiments, the location management device needs to send the configuration information of the sidelink reference signals of the plurality of second terminal devices to the first terminal device. In this case, the location management device may separately send the identifier of each of the plurality of second terminal devices and the configuration information of the sidelink reference signal of the second terminal device to the first terminal device, that is, the identifiers of the second terminal devices are in one-to-one correspondence with the configuration information of the sidelink reference signals of the second terminal devices.

In some embodiments, the location management device needs to send the configuration information of the sidelink reference signals of the plurality of second terminal devices to the first terminal device. In this case, the location management device may send the identifiers of the plurality of second terminal devices and the configuration information of the sidelink reference signal of the second terminal device to the first terminal device. The identifiers of the plurality of second terminal devices are in one-to-one correspondence with the configuration information of the sidelink reference signals of the plurality of second terminal devices. Herein, that the identifiers of the plurality of second terminal devices are in one-to-one correspondence with the configuration information of the sidelink reference signals of the plurality of second terminal devices is described by using an example in which the second terminal devices are RSUs. For example, configuration information of sidelink reference signals of the RSUs is carried in a message in a sequence of an RSU #1, an RSU #2, and an RSU #3. In this case, identifiers of the RSUs also need to be carried in the message in the sequence of the RSU #1, the RSU #2, and the RSU #3. If configuration information of sidelink reference signals of the RSUs is carried in a message in a sequence of an RSU #2, an RSU #1, and an RSU #3, identifiers of the RSUs also need to be carried in the message in the sequence of the RSU #2, the RSU #1, and the RSU #3. Simply speaking, the one-to-one correspondence means that the first terminal device needs to determine the configuration information of the sidelink reference signals of the RSU #1, the RSU #2, and the RSU #3 in a corresponding manner. For another example, the location management device configures a list. The list includes a plurality of pieces of configuration information, and each piece of configuration information includes an identifier of an RSU and configuration information of a sidelink reference signal of the RSU. Alternatively, the one-to-one correspondence may be implemented in another corresponding manner, and details are not described herein.

For example, the first configuration message may further include the first information.

Optionally, the first terminal device obtains the configuration information of the sidelink reference signal of the second terminal device from the second terminal device. Specifically, as shown in FIG. 5, in S520, the second terminal device sends a second configuration message to the first terminal device. The second configuration message includes the configuration information of the sidelink reference signal of the second terminal device. Correspondingly, the first terminal device receives the second configuration message from the second terminal device. For example, the second configuration message may further include the first information.

In some embodiments, a unicast connection is established between the first terminal device and the second terminal device, and the second terminal device sends the configuration information of the sidelink reference signal of the second terminal device to the first terminal device based on the unicast connection. Alternatively, no unicast connection is established between the first terminal device and the second terminal device. For example, the second terminal device sends the configuration information of the sidelink reference signal of the second terminal device to the first terminal device in a broadcast or multicast manner. The second terminal device may further send configuration information of a sidelink reference signal of another second terminal device to the first terminal device. This is not limited in this application.

It may be understood that the method for obtaining the configuration information of the sidelink reference signal of the second terminal device shown in FIG. 5 is merely an example for description. This embodiment of this application is not limited thereto.

Method 3: The location management device receives the first information from the first terminal device.

It may be understood that the first terminal device may obtain the synchronization information of the second terminal device from the second terminal device, and send the synchronization information to the location management device. For example, if a unicast connection has been established between the first terminal device and the second terminal device, the second terminal device sends the synchronization information of the second terminal device to the first terminal device in a unicast manner. The synchronization information of the second terminal device may be carried in an RRC reconfiguration message or another RRC dedicated message on a sidelink between the first terminal device and the second terminal device. Alternatively, if no unicast connection is established between the first terminal device and the second terminal device, the second terminal device sends the synchronization information of the second terminal device to the first terminal device in a broadcast or multicast manner.

Based on Method 3, in a possible specific implementation, the first terminal device may report the first information based on a request of the location management device. For example, that the location management device obtains the first information mainly includes the following steps.

(1) The location management device sends a third request message to the first terminal device. The third request message is used to request the synchronization information of the second terminal device. Correspondingly, the first terminal device receives the third request message from the location management device.

Optionally, in all embodiments of this application, that the third request message is used to request the synchronization information of the second terminal device may also be understood as that the third request message includes third request information, and the third request information is used to request the synchronization information of the second terminal device.

(2) In response to the received third request message, the first terminal device sends a third request response message to the location management device. The third request response message includes the first information. Correspondingly, the location management device receives the third request response message from the first terminal device.

Based on Method 3, in another possible specific implementation, the first terminal device actively reports the first information to the location management device. For example, that the location management device obtains the first information mainly includes the following steps.

When the first terminal device reports a measurement result of a first reference signal to the location management device, the first terminal device further reports first information of one or more second terminal devices corresponding to the measurement result at the same time. That is, the first terminal device always reports the measurement result together with the first information to the location management device.

It should be understood that the first reference signal includes the sidelink reference signal (namely, a reference signal of a PC5 interface) sent by the second terminal device to the first terminal device or the sidelink reference signal sent by the first terminal device to the second terminal device. For example, the first reference signal includes an SL-PRS. Optionally, the first reference signal further includes a reference signal (namely, a reference signal of a Uu interface) sent to the first terminal device by a network device that assists in positioning the location of the first terminal device. For example, the first reference signal includes the SL-PRS and a DL-PRS. Optionally, if a reference signal (for example, an SRS) of a Uu interface that is sent by the first terminal device is further used in the positioning scenario, the first reference signal further includes the reference signal of the Uu interface that is sent by the first terminal device. For example, the first reference signal includes the SL-PRS, the DL-PRS, and the SRS.

S402: The second network device determines the location information of the first terminal device based on the synchronization information of the second terminal device.

The following describes a specific reason why the second network device (location management device) can accurately calculate the location information of the first terminal device after obtaining the first information. Herein, an example is used for description with reference to FIG. 2. After the neighboring base station 104 is replaced with an RSU in the DL-TDOA positioning scenario shown in FIG. 2, for example, in a positioning process, the RSU sends an SL-PRS to the UE 101 at a moment T3. In this case, Formula (1) remains unchanged, and t3' in Formula (2) needs to be replaced with T3, to obtain the following Formula (3):

$$\Delta S3=(t3-T3)*c-(t1-t1')*c=\{(t3-t1)-(T3-t1')\}*c=\{RSTD_{1,3}-(T3-t1')\}*c \ (3)$$

It may be understood that, because the serving base station 102 keeps synchronous with the neighboring base station 103 and the neighboring base station 104, or a sending subframe boundary difference between the serving base station 102, the neighboring base station 103, and the neighboring base station 104 is known, when LMF-based is used, the LMF 105 may determine t3'-t1'. However, after the RSU is used, the LMF 105 does not know synchronization information of the RSU, and therefore cannot determine T3-t1', that is, cannot accurately calculate the location information of the UE 101. However, in this application, the synchronization information of the RSU is obtained, so that the LMF 105 can accurately calculate the location information of the UE 101.

It should be noted that, when at least one RSU is used in the positioning scenario, for a positioning scenario including a reference TP and the at least one RSU, an RSTD is determined by the sidelink reference signal of the PC5 interface and the reference signal of the Uu interface. For example, the neighboring base station 104 is replaced with the RSU. $RSTD_{1,3}$ in the foregoing Formula (3) is obtained by the UE based on a sidelink reference signal sent by the RSU and a positioning reference signal sent by the serving base station 102. In this case, a signal measured by the UE includes not only the downlink reference signal but also the sidelink reference signal. Therefore, in this case, $RSTD_{1,3}$ in Formula (3) is not completely the same as a DL RSTD, but reference may be made to the foregoing calculation manner of the DL RSTD. For example, $RSTD_{1,3}$ in Formula (3) is a relative timing difference, and the relative timing difference may be defined as time C minus time D. The time C is time when the target UE (namely, the UE 101) receives a start of one subframe from the RSU. The time D is time when the target UE receives a corresponding start of one subframe from the reference TP (namely, the serving base station 102), where the subframe is closest in time to the subframe received from the RSU.

It should be noted that, when at least one RSU is used in a positioning scenario, for a positioning scenario including only the RSU, that is, when a reference base station is also replaced with the RSU, the RSTD is determined only by the sidelink reference signal of the PC5 interface. For example, the serving base station 102, the neighboring base station 103, and the neighboring base station 104 are all replaced with RSUs. $RSTD_{1,2}$ in Formula (2) and $RSTD_{1,3}$ in Formula (3) are obtained by the UE based on sidelink reference signals sent by the RSUs. In this case, a signal measured by the UE includes only the sidelink reference signals. Therefore, in this case, $RSTD_{1,2}$ in Formula (2) and $RSTD_{1,3}$ in Formula (3) are not completely the same as the DL RSTD, but reference may be made to the foregoing calculation manner of the DL RSTD. For example, $RSTD_{1,2}$ in Formula (2) is a relative timing difference, and the relative timing difference may be defined as time E minus time F. The time E is time when the target UE receives a start of one subframe from an $RSU_2$. The time F is time when the target UE receives a corresponding start of one subframe from a reference $RSU_1$, where the subframe is closest in time to the subframe received from the $RSU_2$. $RSTD_{1,3}$ in Formula (3) is a relative timing difference, and the relative timing difference may be defined as time G minus time F. The time E is time when the target UE receives a start of one subframe from an $RSU_3$. The time F is time when the target UE receives a corresponding start of one subframe from the reference $RSU_1$, where the subframe is closest in time to the subframe received from the $RSU_3$.

In addition, as described in S401, a synchronization source of the RSU may be a serving network device of the RSU or a GNSS. In this application, when the at least one RSU is used in the positioning scenario, a synchronization source does not need to be the same for the RSU. To be specific, when the at least one RSU is used in the positioning scenario, the synchronization source of the RSU may be only a serving network device of the RSU, or the synchronization source of the RSU is only a GNSS. In addition, synchronization sources of some RSUs are serving network devices of the RSUs, and synchronization sources of some other RSUs are GNSSs. This is not limited in this application.

Similarly, if the at least one RSU is used in the positioning scenario, when a UL-TDOA positioning method is used, the location information of the target UE may be obtained based on the reference signal of the Uu interface and the reference signal of the PC5 interface, or the location information of the target UE may be obtained based only on the sidelink reference signal of the PC5 interface. Details are not described herein again.

It may be understood that, in all embodiments provided in this application, the first terminal device may further report, to the location management device, the identifier of the second terminal device that can be configured to position the location of the first terminal device, to avoid a resource waste caused when a second terminal device that does not need to send a sidelink reference signal also sends the sidelink reference signal to the first terminal device. In this case, optionally, the method may further include the following steps.

(1) The first terminal device sends a first message to the location management device. The first message includes the identifier of the second terminal device. Correspondingly, the location management device receives the first message from the first terminal device.

(2) The location management device sends first indication information to a third terminal device. The first indication information indicates the third terminal device not to send a sidelink reference signal to the first terminal device. The third terminal device is another terminal device, other than the terminal device corresponding to the identifier of the second terminal device, in all terminal devices.

For example, all the terminal devices in (2) are all terminal devices covered by all network devices requested by the location management device to assist in positioning the first terminal device. Alternatively, all the terminal devices are terminal devices covered by all network devices requested by the location management device to assist in positioning the first terminal device, where these terminal devices are close to the first terminal device. Alternatively, all the terminal devices are all the second terminal devices corresponding to the configuration information that is of the sidelink reference signal of the second terminal devices and that is included in the first configuration message sent by the location management device to the first terminal device in S510. Alternatively, all the terminal devices are all the second terminal devices in the second configuration message sent to the first terminal device in S520.

It may be understood that embodiments in this application are applicable to all positioning methods in which the target UE can be accurately positioned only when the first information is obtained. This is not specifically limited in this application.

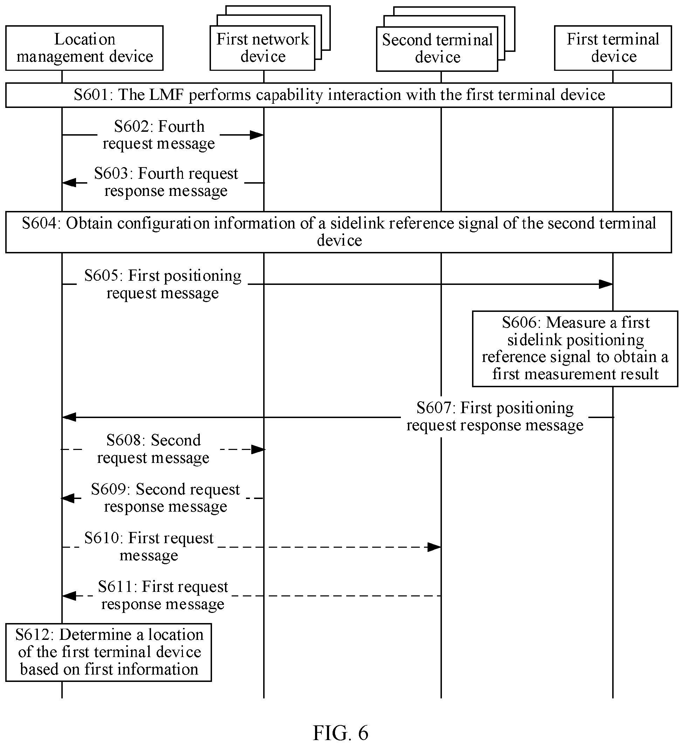

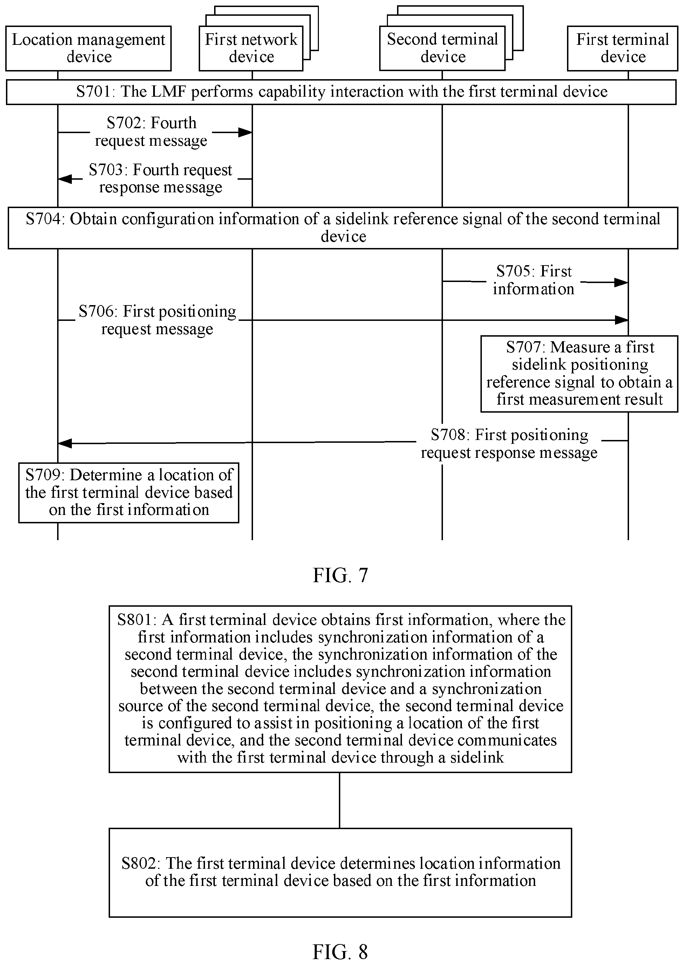

The foregoing describes in detail the method for obtaining the first information by the location management device with reference to FIG. 4. Based on the method shown in FIG. 4, the following provides two possible specific implementation procedures in which the location management device calculates the location information of the first terminal device in FIG. 6 and FIG. 7.

FIG. 6 is a schematic flowchart of calculating location information of a first terminal device by a location management device according to this application. The method may include the following steps.

S601: A positioning initiator initiates positioning of a first terminal device, and the location management device performs capability interaction with the first terminal device, for example, performing a capability transmission procedure.

Optionally, the first terminal device sends, to the location management device, an identifier of a second terminal device whose sidelink signal can be received by the first terminal device. For example, if the second terminal device is an RSU, the identifier of the second terminal device is an identifier of the RSU. The location management device may determine, with reference to the identifier of the second terminal device that is sent by the first terminal device, terminal devices configured to assist in positioning a location of the first terminal device. The identifier may be a layer 2 identifier, or the identifier is an identifier negotiated between the first terminal device and the location management device. This is not limited in this application.

S602: The location management device sends a fourth request message to a first network device. The fourth request message is used to request to configure configuration information of a sidelink reference signal of the second terminal device. The first network device is a serving network device of the second terminal device. Correspondingly, the first network device receives the fourth request message from the location management device.

S603: The first network device sends a fourth request response message to the location management device. The fourth request response message includes the configuration information of the sidelink reference signal of the second terminal device. Correspondingly, the location management device receives the fourth request response message from the first network device.

In this method, if the second terminal device is in RRC connected mode before S602 or when S602, and the first network device knows synchronization information of the second terminal device, the first network device may send the synchronization information of the second terminal device to the location management device in the fourth request response message, that is, the fourth request response message further includes first information. If the second terminal device is in non-RRC connected mode before S602 or when S602, and the first network device does not know synchronization information of the second terminal device, the first network device cannot send the synchronization information of the second terminal device to the location management device in the fourth request response message, that is, the fourth request response message does not include first information.

S604: The first terminal device obtains the configuration information of the sidelink reference signal of the second terminal device.

For a configuration manner in which the location management device and the first terminal device obtain the configuration information of the sidelink reference signal of the second terminal device in S602 to S604, refer to the foregoing descriptions of FIG. 5. Details are not described herein again.

Optionally, the first terminal device may report, to the location management device, the identifier of the second terminal device that can be configured to position the location of the first terminal device, to avoid a resource waste caused when all terminal devices send sidelink reference signals to the first terminal device. In this way, the location management device may indicate a terminal device other than the second terminal device in all the terminal devices not to send a sidelink reference signal to the first terminal device. All the terminal devices are all terminal devices covered by all network devices requested by the location management device to assist in positioning the first terminal device. Alternatively, all the terminal devices are terminal devices covered by all network devices requested by the location management device to assist in positioning the first terminal device, where these terminal devices are close to the first terminal device. Alternatively, all the terminal devices are all the second terminal devices corresponding to the configuration information that is of the sidelink reference signal of the second terminal devices and that is included in the first configuration message sent by the location management device to the first terminal device in S510. Alternatively, all the terminal devices are all the second terminal devices in the second configuration message sent to the first terminal device in S520.

S605: The location management device sends a first positioning request message to the first terminal device. The first positioning request message is used to request the first terminal device to measure a first reference signal, or is used to request positioning measurement of the first terminal device. Correspondingly, the first terminal device receives the first positioning request message from the location management device. It should be understood that the first reference signal includes the sidelink reference signal (namely, a reference signal of a PC5 interface) sent by the second terminal device to the first terminal device or a sidelink reference signal sent by the first terminal device to the second terminal device. For example, the first reference signal includes an SL-PRS. Optionally, the first reference signal further includes a reference signal (namely, a reference signal of a Uu interface) sent to the first terminal device by a network device that assists in positioning the location of the first terminal device. For example, the first reference signal includes the SL-PRS and a DL-PRS. Optionally, if a reference signal (for example, an SRS) of a Uu interface that is sent by the first terminal device is further used in a positioning scenario, the first reference signal further includes the reference signal of the Uu interface that is sent by the first terminal device. For example, the first reference signal includes the SL-PRS, the DL-PRS, and the SRS.

In some embodiments, a unicast connection is established between the first terminal device and the second terminal device, and the second terminal device sends the first reference signal to the first terminal device based on the unicast connection. For example, the second terminal device separately sends the first reference signal to the first terminal device. In this case, when the second terminal device needs to send the first reference signal to a plurality of first terminal devices, the second terminal device separately sends the first reference signal to each first terminal device. For another example, the second terminal device simultaneously sends the first reference signal to at least one first terminal device. In this case, when the second terminal device needs to send the first reference signal to a plurality of first terminal devices, similar to a broadcast sending manner, the second terminal device needs to send the first reference signal only once.

In some embodiments, no unicast connection is established between the first terminal device and the second terminal device, and the second terminal device sends the first reference signal the first terminal device in a broadcast or multicast manner. This is not limited in this application.

It should be noted that the foregoing manner of sending the first reference signal is not only applicable to sending, by the second terminal device, the first reference signal to the first terminal device, but also applicable to sending, by the first terminal device, a first reference signal to the second terminal device. This is not limited in this application.

For example, the first positioning request message is LPP request location information.

S606: The first terminal device measures the first reference signal to obtain a first measurement result.

For example, the first measurement result obtained by the first terminal device includes an RSTD, for example, includes an RSTD obtained by the first terminal device based on transmission of a sidelink reference signal between the first terminal device and one or more second terminal devices. The first measurement result further includes information such as the identifier of the second terminal device.

S607: The first terminal device sends a first positioning request response message to the location management device. The first positioning request response message includes the first measurement result.

Optionally, the first terminal device may further report time information corresponding to the first reference signal to the location management device, for example, a frame number and a subframe number for transmission (receiving or sending) of the SL-PRS by the first terminal device.

Optionally, if the fourth request response message in S603 includes the first information, S612 is performed. For example, if the second terminal device is in RRC connected mode before S602 or when S602, and the location management device obtains the first information of the second terminal device from the first network device, the location management device may perform S612.

Optionally, if the fourth request response message in S603 does not include the first information, the location management device may request the first information from the first network device. In this case, S608 and S609 are performed. Alternatively, the location management device may request first information from the second terminal device, and S610 and S611 are performed. For example, if the second terminal device is not in RRC connected mode before S602 or when S602, for example, the second terminal device is in RRC idle mode or RRC inactive mode, and the location management device does not obtain the first information of the second terminal device from the first network device, the location management device may request, based on the first measurement result reported by the first terminal device, the first information of the second terminal device that is included in the first measurement result from the first network device or the second terminal device.

S608: The location management device sends a second request message to the first network device. The second request message is used to request the synchronization information of the second terminal device. Correspondingly, the first network device receives the second request message from the location management device.

For example, the second request message includes identifiers of one or more second terminal devices.

Optionally, the location management device may determine, based on the first measurement result, second terminal devices whose synchronization information is required by the location management device, and request the synchronization information of the second terminal devices from serving network devices of the second terminal devices. It may be understood that the serving network devices of these second terminal devices may be a same network device, or may be different network devices. Herein, an example in which the second terminal devices are RSUs is used for description. The location management device may determine, based on the first measurement result, that synchronization information of an RSU #1, an RSU #2, and an RSU #3 needs to be obtained. A serving network device of the RSU #1 and the RSU #2 is a base station #1 (namely, an example of the first network device), and a serving base station of the RSU #3 is a base station #2 (namely, another example of the first network device). In this case, the location management device sends a request message #1 (namely, an example of the second request message) to the base station #1, where the request message #1 is used to request the synchronization information of the RSU #1 and the RSU #2, and the request message #1 includes identifiers of the RSU #1 and the RSU #2. The location management device sends a request message #2 (namely, another example of the second request message) to the base station #2, where the request message #2 is used to request the synchronization information of the RSU #3, and the request message #2 includes an identifier of the RSU #3.

S609: In response to the received second request message, the first network device sends a second request response message to the location management device. The second request response message includes the first information. Correspondingly, the location management device receives the second request response message from the first network device. Then, S612 is performed.

For example, the second request response message includes the first information of the one or more second terminal devices requested by the location management device in the second request message.

For ease of understanding, the request message #1 and the request message #2 in S608 are used as an example for further description. In response to the received request message # 1, the base station #1 sends a request response message #1 to the location management device. The request response message # 1 includes the synchronization information of the RSU #1 and the RSU #2. In response to the received request message # 2, the base station #2 sends a request response message #2 to the location management device. The request response message # 2 includes the synchronization information of the RSU #3.

S610: The location management device sends a first request message to the second terminal device. The first request message is used to request the synchronization information of the second terminal device. Correspondingly, the second terminal device receives the first request message from the location management device.

S611: In response to the received first request message, the second terminal device sends a first request response message to the location management device. The first request response message includes the first information. Correspondingly, the location management device receives the first request response message from the second terminal device. Then, S612 is performed.

S612: The location management device determines location information of the first terminal device based on the first information.

Specifically, the location management device determines the location information of the first terminal device based on the first information and the first measurement result. For a specific process of determining the location of the first terminal device, refer to the foregoing descriptions. Details are not described herein again.

FIG. 7 is another schematic flowchart of calculating location information of a first terminal device by a location management device according to this application. The method may include the following steps.

For details of S701 and S702, refer to the descriptions in S601 and S602. Details are not described herein again.

S703: The first network device sends a fourth request response message to the location management device. The fourth request response message includes configuration information of a sidelink reference signal of a second terminal device. Correspondingly, the location management device receives the fourth request response message from the first network device.

Optionally, in this step, if the second terminal device is in RRC connected mode before S702 or when S702, and the first network device knows synchronization information of the second terminal device, the first network device may send the synchronization information of the second terminal device to the location management device in the fourth request response message, that is, the fourth request response message further includes first information. If the second terminal device is in non-RRC connected mode before S702 or when S702, and the first network device does not know synchronization information of the second terminal device, the first network device cannot send the synchronization information of the second terminal device to the location management device in the fourth request response message, that is, the fourth request response message does not include first information.

Optionally, in this step, regardless of whether the first network device knows the synchronization information of the second terminal device, the first network device does not send the synchronization information of the second terminal device to the location management device.

S704: The first terminal device obtains the configuration information of the sidelink reference signal of the second terminal device.

For a configuration manner in which the location management device and the first terminal device obtain the configuration information of the sidelink reference signal of the second terminal device in S702 to S704, refer to the foregoing descriptions of FIG. 5. Details are not described herein again. S705: The second terminal device sends the first information to the first terminal device. Correspondingly, the first terminal device receives the first information from the second terminal device.

For a sending manner in which the second terminal device sends the first information to the first terminal device, refer to the descriptions of Method 3 in FIG. 4.

S706: The location management device sends a first positioning request message to the first terminal device. The first positioning request message is used to request the first terminal device to measure a first reference signal, or is used to request positioning measurement of the first terminal device. Correspondingly, the first terminal device receives the first positioning request message from the location management device.

Optionally, if the fourth request response message in S703 does not include the first information, the first positioning request message further includes first positioning request information. For example, the first positioning request information includes identifiers of one or more second terminal devices. In this case, the first positioning request message may be used to request the synchronization information of the second terminal device.

S707: The first terminal device measures the first reference signal to obtain a first measurement result.

For descriptions of the first reference signal, refer to the descriptions in S605. For descriptions of the first measurement result, refer to the descriptions in S606. Details are not described herein again.

S708: The first terminal device sends a first positioning request response message to the location management device. The first positioning request response message includes the first measurement result. Correspondingly, the location management device receives the first positioning request response message from the first terminal device.

Optionally, if the fourth request response message in S703 does not include the first information, the first positioning request message further includes identifiers of one or more second terminal devices. In this case, the first positioning request message may be used to request synchronization information of the second terminal devices corresponding to the identifiers of the one or more second terminal devices. In this step, the first positioning request response message further includes first information of the one or more second terminal devices.

Optionally, an RRC mode of the second terminal device is not distinguished in this step, and the first terminal device may actively report first information of one or more second terminal devices corresponding to the first measurement result.

S709: The location management device determines location information of the first terminal device based on the first information.

Specifically, the location management device determines the location information of the first terminal device based on the first information and the first measurement result. For a specific process of determining the location of the first terminal device, refer to the foregoing descriptions. Details are not described herein again.

The foregoing describes in detail a process in which the location management device calculates the location of the target UE. The following continues to describe a process in which the target UE itself calculates the location of the target UE with reference to FIG. 8.

FIG. 8 is a schematic flowchart of another positioning method according to an embodiment of this application. In this method, a target UE calculates location information of the target UE. The method may include the following steps.

S801: A first terminal device obtains first information, where the first information includes synchronization information of a second terminal device, the synchronization information of the second terminal device includes synchronization information between the second terminal device and a synchronization source of the second terminal device, the second terminal device is configured to assist in positioning a location of the first terminal device, and the second terminal device communicates with the first terminal device through a sidelink.

For example, in the positioning scenario shown in FIG. 2, the first terminal device may be considered as the UE 101, and the second terminal device may be considered as an RSU.

It should be understood that, one or more second terminal devices that assist in positioning the location of the first terminal device may be included in a scenario. This is not limited in this application. For the synchronization information of the second terminal device, refer to the descriptions in S401. Details are not described herein again.

Optionally, the first terminal device may obtain the first information by using any one of the following methods.

Method 4: The first terminal device receives the first information from a location management device.

Based on Method 4, in a possible specific implementation, that the first terminal device obtains the first information mainly includes the following steps.

The location management device sends a first configuration message to the first terminal device. The first configuration message includes configuration information of a sidelink reference signal of the second terminal device and the first information. The configuration information of the sidelink reference signal of the second terminal device is used by the first terminal device to receive the sidelink reference signal of the second terminal device. Correspondingly, the first terminal device receives the first configuration message from the location management device.

Optionally, the location management device may alternatively send the first information and the first configuration message separately. To be specific, the first configuration message includes the configuration information of the sidelink reference signal of the second terminal device, and the first information is carried in another message.

Optionally, the location management device may alternatively send the first information and the configuration information of the sidelink reference signal of the second terminal device separately. To be specific, the location management device separately sends the first configuration message including the configuration information of the sidelink reference signal of the second terminal device and the first configuration message including the first information.

For how the location management device obtains the first information and the configuration information of the sidelink reference signal of the second terminal device in this method, refer to the descriptions of Method 1 and Method 2 in S401. Details are not described herein again.

Method 5: The first terminal device receives the first information from the second terminal device.

It may be understood that the first terminal device communicates with the second terminal device based on a sidelink in a PC5 interface. The first terminal device may obtain the first information from the second terminal device through the PC5 interface.

Based on Method 5, in a possible specific implementation, that the first terminal device obtains the first information mainly includes the following steps.

The second terminal device sends a second configuration message to the first terminal device. The second configuration message includes configuration information of a sidelink reference signal of the second terminal device and the first information. The configuration information of the sidelink reference signal of the second terminal device is used by the first terminal device to receive the sidelink reference signal of the second terminal device. Correspondingly, the first terminal device receives the second configuration message from the second terminal device.

Optionally, the second terminal device may alternatively send the first information and the second configuration message separately. To be specific, the second configuration message includes the configuration information of the sidelink reference signal of the second terminal device, and the first information is carried in another message.

Optionally, the second terminal device may alternatively send the first information and the configuration information of the sidelink reference signal of the second terminal device separately. To be specific, the second terminal device separately sends the second configuration message including the configuration information of the sidelink reference signal of the second terminal device and the second configuration message including the first information.

S802: The first terminal device determines location information of the first terminal device based on the first information.

For a specific reason why the first terminal device can accurately calculate the location of the first terminal device after obtaining the first information, refer to the descriptions in S402. Details are not described herein again.

It may be understood that, the first terminal device may further report, to the location management device, an identifier of the second terminal device that can be configured to position the location of the first terminal device, to avoid a resource waste caused when a second terminal device that does not need to send a sidelink reference signal also sends the sidelink reference signal to the first terminal device. In this case, optionally, the method may further include the following steps.

(1) The first terminal device sends a first message to the location management device. The first message includes the identifier of the second terminal device. Correspondingly, the location management device receives the first message from the first terminal device.

(2) The location management device sends first indication information to a third terminal device. The first indication information indicates the third terminal device not to send a reference signal to the first terminal device. The third terminal device is another terminal device, other than the terminal device corresponding to the identifier of the second terminal device, in all terminal devices.

For example, all the terminal devices in (2) are all terminal devices covered by all network devices requested by the location management device to assist in positioning the first terminal device. Alternatively, all the terminal devices are terminal devices covered by all network devices requested by the location management device to assist in positioning the first terminal device, where these terminal devices are close to the first terminal device. Alternatively, all the terminal devices are all the second terminal devices corresponding to the configuration information that is of the sidelink reference signal of the second terminal devices and that is included in the first configuration message sent by the location management device to the first terminal device in S510. Alternatively, all the terminal devices are all the second terminal devices in the second configuration message sent to the first terminal device in S520.

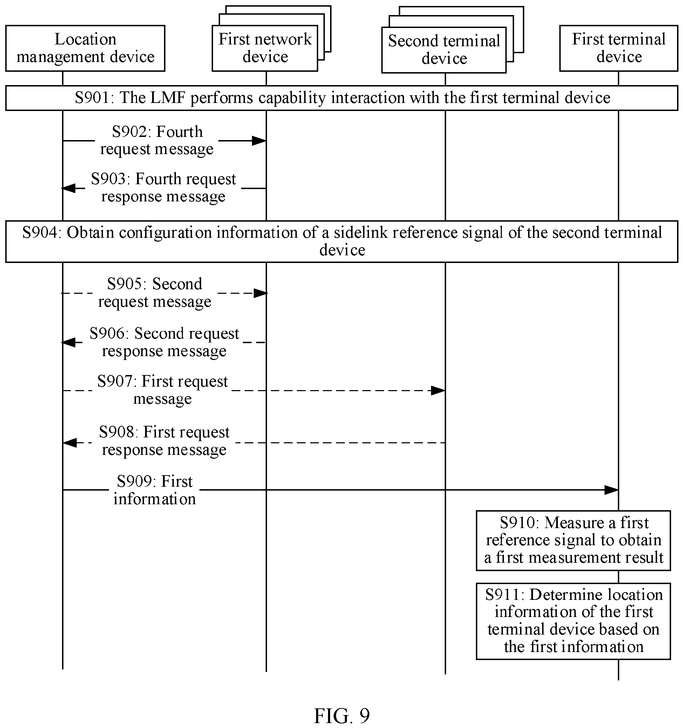

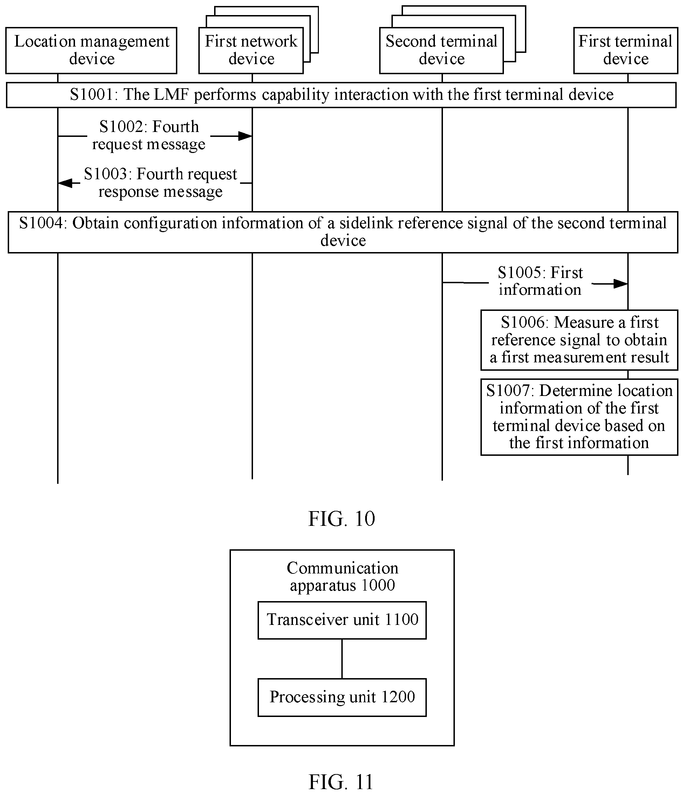

The foregoing describes in detail the method for obtaining the first information by the first terminal device with reference to FIG. 8. Based on the method shown in FIG. 8, the following provides two possible specific implementation procedures in which the first terminal device calculates the location of the first terminal device in FIG. 9 and FIG. 10.

FIG. 9 is a schematic flowchart of calculating location information of a first terminal device by the first terminal device according to this application. The method may include the following steps.

S901: A positioning initiator initiates positioning of the first terminal device, and a location management device performs capability interaction with the first terminal device, for example, performing a capability transmission procedure.

For details of S901, refer to the descriptions in S601. Details are not described herein again.

S902: The location management device sends a fourth request message to a first network device. The fourth request message is used to request to configure configuration information of a sidelink reference signal of the second terminal device. The first network device is a serving network device of the second terminal device. Correspondingly, the first network device receives the fourth request message from the location management device.

S903: The first network device sends a fourth request response message to the location management device. The fourth request response message includes the configuration information of the sidelink reference signal of the second terminal device. Correspondingly, the location management device receives the fourth request response message from the first network device.

In this method, if the second terminal device is in RRC connected mode before S902 or when S902, and the first network device knows synchronization information of the second terminal device, the first network device may send the synchronization information of the second terminal device to the location management device in the fourth request response message, that is, the fourth request response message further includes first information. If the second terminal device is in non-RRC connected mode before S902 or when S902, and the first network device does not know synchronization information of the second terminal device, the first network device cannot send the synchronization information of the second terminal device to the location management device in the fourth request response message, that is, the fourth request response message does not include first information.

S904: The first terminal device obtains the configuration information of the sidelink reference signal of the second terminal device.

For a configuration manner in which the location management device and the first terminal device obtain the configuration information of the sidelink reference signal of the second terminal device in S902 to S904, refer to the foregoing descriptions of FIG. 5. Details are not described herein again.

For example, if the fourth request response message in S903 includes the first information, S909 is performed. For example, if the second terminal device is in RRC connected mode before S902 or when S902, and the location management device obtains the first information of the second terminal device from the first network device, the location management device may send the first information to the first terminal device.

For example, if the fourth request response message in S903 does not include the first information, the location management device may request the first information from the first network device. In this case, S905 and S906 are performed. Alternatively, the location management device may request first information from the second terminal device, and S907 and S908 are performed. For example, if the second terminal device is not in RRC connected mode before S902 or when S902, for example, the second terminal device is in RRC idle mode or RRC inactive mode, and the location management device does not obtain the first information of the second terminal device from the first network device, the location management device may request the first information of the second terminal device from the first network device or the second terminal device.

S905: The location management device sends a second request message to the first network device. The second request message is used to request the synchronization information of the second terminal device. Correspondingly, the first network device receives the second request message from the location management device.

For descriptions of the second request message, refer to S608. Details are not described herein again.

S906: In response to the received second request message, the first network device sends a second request response message to the location management device. The second request response message includes the first information. Correspondingly, the location management device receives the second request response message from the first network device. Then, S909 is performed.

For descriptions of the second request response message, refer to S609. Details are not described herein again.

S907: The location management device sends a first request message to the second terminal device. The first request message is used to request the synchronization information of the second terminal device. Correspondingly, the second terminal device receives the first request message from the location management device.

S908: In response to the received first request message, the second terminal device sends a first request response message to the location management device. The first request response message includes the first information. Correspondingly, the location management device receives the first request response message from the second terminal device. Then, S909 is performed.

S909: The location management device sends the first information to the first terminal device. Correspondingly, the first terminal device receives the first information from the location management device.

Optionally, if the first terminal device needs to obtain the configuration information of the sidelink reference signal of the second terminal device from the location management device in S904, the location management device may send both the configuration information of the sidelink reference signal of the second terminal device and the first information to the first terminal device in S909.

S910: The first terminal device measures a first reference signal to obtain a first measurement result.

For descriptions of the first reference signal, refer to the descriptions in S605. For descriptions of the first measurement result, refer to the descriptions in S606. Details are not described herein again.

S911: The first terminal device determines location information of the first terminal device based on the first information.

Specifically, the first terminal device determines the location information of the first terminal device based on the first information and the first measurement result. For a specific process of determining the location of the first terminal device, refer to the foregoing descriptions. Details are not described herein again.

FIG. 10 is another schematic flowchart of calculating location information of a first terminal device by the first terminal device according to this application. The method may include the following steps.

S1001: A positioning initiator initiates positioning of the first terminal device, and a location management device performs capability interaction with the first terminal device, for example, performing a capability transmission procedure.

For details of S1001, refer to the descriptions in S601. Details are not described herein again.

S1002: The location management device sends a fourth request message to a first network device. The fourth request message is used to request to configure configuration information of a sidelink reference signal of the second terminal device. The first network device is a serving network device of the second terminal device. Correspondingly, the first network device receives the fourth request message from the location management device.

S1003: The first network device sends a fourth request response message to the location management device. The fourth request response message includes the configuration information of the sidelink reference signal of the second terminal device. Correspondingly, the location management device receives the fourth request response message from the first network device.

Optionally, if the second terminal device is in RRC connected mode before S1002 or when S1002, and the first network device knows synchronization information of the second terminal device, the first network device may send the synchronization information of the second terminal device to the location management device in the fourth request response message, that is, the fourth request response message further includes first information. If the second terminal device is in non-RRC connected mode before S1002 or when S1002, and the first network device does not know synchronization information of the second terminal device, the first network device cannot send the synchronization information of the second terminal device to the location management device in the fourth request response message, that is, the fourth request response message does not include first information.

Optionally, in this step, regardless of whether the first network device knows the synchronization information of the second terminal device, the first network device does not send the synchronization information of the second terminal device to the location management device.

S1004: The first terminal device obtains the configuration information of the sidelink reference signal of the second terminal device.

For a configuration manner in which the location management device and the first terminal device obtain the configuration information of the sidelink reference signal of the second terminal device in S1002 to S1004, refer to the foregoing descriptions of FIG. 5. Details are not described herein again.

S1005: The second terminal device sends the first information to the first terminal device. Correspondingly, the first terminal device receives the first information from the second terminal device.

For a sending manner in which the second terminal device sends the first information to the first terminal device, refer to the descriptions of Method 3 in FIG. 4.

In some embodiments, S1004 and S1005 may be simultaneously performed. To be specific, the second terminal device simultaneously sends the configuration information of the sidelink reference signal of the second terminal device and the first information to the first terminal device.

In some embodiments, the first terminal device obtains the configuration information of the sidelink reference signal of the second terminal device from the location management device, and the first terminal device obtains the first information from the second terminal device.

S1006: The first terminal device measures a first reference signal to obtain a first measurement result.

For descriptions of the first reference signal, refer to the descriptions in S605. For descriptions of the first measurement result, refer to the descriptions in S606. Details are not described herein again.

S1007: The first terminal device determines location information of the first terminal device based on the first information.

Specifically, the first terminal device determines the location information of the first terminal device based on the first information and the first measurement result. For descriptions of the first reference signal and a specific process of determining the location of the first terminal device, refer to the foregoing descriptions. Details are not described herein again.

It may be understood that, in this application, obtaining the first information is a necessary step. In all embodiments of this application, another step may be an optional step. It may be understood that the steps in FIG. 4 to FIG. 10 are merely examples for description, and no strict limitations are imposed. In addition, sequence numbers of the foregoing processes do not mean a sequence of execution. The sequence of execution of the processes should be determined based on functions and internal logic of the processes, and should not constitute any limitation on an implementation process of embodiments of this application.

It may be further understood that some message names in embodiments of this application do not limit the protection scope of embodiments of this application.

It may be further understood that some optional features in embodiments of this application may be independent of other features in some scenarios, or may be combined with other features in some scenarios. This is not limited.

It may be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one item (piece) of the following" or a similar expression thereof means any combination of these items, including a singular item (piece) or any combination of plural items (pieces). For example, at least one (piece) of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, the first request message and the second request message may be a same message, or may be different messages. In addition, such names do not indicate a difference between content, sizes, application scenarios, transmit ends/receive ends, priorities, importance, or the like of the two messages. In addition, step numbers in embodiments described in this application are merely used to distinguish between different steps, but are not used to limit a sequence of the steps. For example, S503 may be performed before S504, may be performed after S504, or may be performed at the same time with S504.

It may be further understood that, in the foregoing method embodiments, the method and the operation implemented by the device may also be implemented by a component (for example, a chip or a circuit) of the device. This is not limited.

Corresponding to the methods provided in the foregoing method embodiments, an embodiment of this application further provides a corresponding apparatus. The apparatus includes corresponding modules configured to perform the foregoing method embodiments. The module may be software, hardware, or a combination of the software and the hardware. It may be understood that the technical features described in the foregoing method embodiments are also applicable to the following apparatus embodiments.

It may be understood that, in the foregoing method embodiments, the method and the operation implemented by the device (for example, the foregoing first terminal device, second terminal device, LMF, or network device) may also be implemented by a component (for example, a chip or a circuit) of the device.

The foregoing describes in detail the method provided in embodiments of this application with reference to FIG. 1 to FIG. 10. The foregoing methods are mainly described from a perspective of interaction between network elements. It may be understood that, to implement the foregoing functions, the terminal device and the network device include corresponding hardware structures and/or software modules for performing the functions.

A person skilled in the art should be able to be aware that, in combination with units and algorithm steps of the examples described in embodiments disclosed in this specification, this application can be implemented by hardware or a combination of the hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

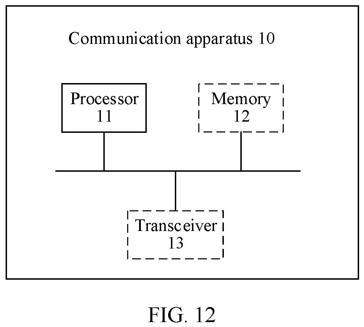

The following describes in detail communication apparatuses provided in embodiments of this application with reference to FIG. 11 and FIG. 12. It should be understood that descriptions of the apparatus embodiments correspond to the descriptions of the method embodiments. Therefore, for content that is not described in detail, refer to the foregoing method embodiments. For brevity, a part of content is not described again. In embodiments of this application, functional modules of the terminal device or the network device may be obtained through division based on the foregoing method examples. For example, functional modules may be obtained through division in correspondence to functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. Descriptions are provided below by using an example in which each functional module is obtained through division based on each corresponding function.

FIG. 11 is a schematic block of a communication apparatus 1000 according to this application. As shown in FIG. 11, the apparatus 1000 includes a transceiver unit 1100 and a processing unit 1200. The transceiver unit 1100 may be configured to implement a corresponding communication function. The transceiver unit 1100 may also be referred to as a communication interface or a communication unit. The processing unit 1200 may be configured to perform data or information processing.

Optionally, the apparatus 1000 further includes a storage unit. The storage unit may be configured to store instructions and/or data. The processing unit 1200 may read the instructions and/or the data in the storage unit, to enable the apparatus to implement the actions performed by the terminal device in the foregoing method embodiments.

In a possible design, the apparatus 1000 may be configured to perform the actions performed by the first terminal device in the foregoing method embodiments. In this case, the apparatus 1000 may be the first terminal device or a component of the first terminal device. The transceiver unit 1100 is configured to perform receiving/sending-related operations on the first terminal device side in the foregoing method embodiments. The processing unit 1200 is configured to perform processing-related operations on the first terminal device side in the foregoing method embodiments.

In a possible implementation, the transceiver unit 1100 obtains first information. The first information includes synchronization information of a second terminal device. The synchronization information of the second terminal device includes synchronization information between the second terminal device and a synchronization source of the second terminal device. The second terminal device is configured to assist in positioning a location of the first terminal device. The second terminal device communicates with the first terminal device through a sidelink. The processing unit 1200 is configured to determine location information of the first terminal device based on the first information.

Optionally, the transceiver unit 1100 is specifically configured to receive the first information from a second network device of a location management function network element.

Optionally, the transceiver unit 1100 is specifically configured to receive the first information from the second terminal device.

Optionally, the transceiver unit 1100 is specifically configured to receive a first configuration message from the second network device of the location management function network element. The first configuration message includes configuration information of a sidelink reference signal of the second terminal device. The configuration information of the sidelink reference signal of the second terminal device is used by the first terminal device to receive the sidelink reference signal of the second terminal device. The first configuration message further includes the first information.

Optionally, the transceiver unit 1100 is specifically configured to receive a second configuration message from the second terminal device. The second configuration message includes configuration information of a sidelink reference signal of the second terminal device. The configuration information of the sidelink reference signal of the second terminal device is used by the first terminal device to receive the sidelink reference signal of the second terminal device. The second configuration message further includes the first information.

Optionally, the transceiver unit 1100 is further configured to send a first message to the second network device of the location management function network element. The first message includes an identifier of the second terminal device.

For example, the second terminal device is a group of terminal devices, and the group of terminal devices includes one or more terminal devices.

The apparatus 1000 may implement the steps or the procedures performed by the first terminal device in the method embodiments according to embodiments of this application. The apparatus 1000 may include units configured to perform the method performed by the first terminal device in the embodiments shown in FIG. 4 to FIG. 10. A specific process in which each unit performs the foregoing corresponding steps has been described in detail in the foregoing method embodiments. For brevity, details are not described herein again.

In another possible implementation, the transceiver unit 1100 obtains first information. The first information includes synchronization information of a second terminal device. The synchronization information of the second terminal device includes synchronization information between the second terminal device and a synchronization source of the second terminal device. The second terminal device is configured to assist in positioning a location of the first terminal device. The second terminal device communicates with the first terminal device through a sidelink. The transceiver unit 1100 is further configured to send the first information to a second network device of a location management function network element.

Optionally, the transceiver unit 1100 is specifically configured to receive the first information from the second terminal device.

Optionally, the transceiver unit 1100 is specifically configured to receive a second configuration message from the second terminal device. The second configuration message includes configuration information of a sidelink reference signal of the second terminal device. The configuration information of the sidelink reference signal of the second terminal device is used by the first terminal device to receive the sidelink reference signal of the second terminal device. The second configuration message further includes the first information.

Optionally, the transceiver unit 1100 is further configured to send a first message to the second network device of the location management function network element. The first message includes an identifier of the second terminal device.

For example, the second terminal device is a group of terminal devices, and the group of terminal devices includes one or more terminal devices.

The apparatus 1000 may implement the steps or the procedures performed by the first terminal device in the method embodiments according to embodiments of this application. The apparatus 1000 may include units configured to perform the method performed by the first terminal device in the embodiments shown in FIG. 4 to FIG. 10. A specific process in which each unit performs the foregoing corresponding steps has been described in detail in the foregoing method embodiments. For brevity, details are not described herein again.

In another possible design, the apparatus 1000 may be configured to perform the actions performed by the second network device in the foregoing method embodiments. In this case, the apparatus 1000 may be the second network device or a component of the second network device. The transceiver unit 1100 is configured to perform receiving/sending-related operations on the second network device side in the foregoing method embodiments. The processing unit 1200 is configured to perform processing-related operations on the second network device side in the foregoing method embodiments.

In a possible implementation, the transceiver unit 1100 is configured to obtain first information. The first information includes synchronization information of a second terminal device. The synchronization information of the second terminal device includes synchronization information between the second terminal device and a synchronization source of the second terminal device. The second terminal device is configured to assist in positioning a location of a first terminal device. The second terminal device communicates with the first terminal device through a sidelink. The processing unit 1200 is configured to determine location information of the first terminal device based on the synchronization information of the second terminal device.

Optionally, the transceiver unit 1100 is specifically configured to receive the first information from the second terminal device.

Optionally, the transceiver unit 1100 is specifically configured to receive the first information from a serving network device of the second terminal device.

Optionally, the transceiver unit 1100 is specifically configured to receive the first information from the first terminal device.

Optionally, the transceiver unit 1100 is further configured to send a first request message to the second terminal device. The first request message is used to request the synchronization information of the second terminal device. The transceiver unit 1100 is further configured to receive a first request response message from the second terminal device. The first request response message includes the first information.

Optionally, the transceiver unit 1100 is further configured to send a second request message to the serving network device of the second terminal device. The second request message is used to request the synchronization information of the second terminal device. The transceiver unit 1100 is further configured to receive a second request response message from the serving network device of the second terminal device. The second request response message includes the first information.

Optionally, the transceiver unit 1100 is further configured to send a third request message to the first terminal device. The third request message is used to request the synchronization information of the second terminal device. The transceiver unit 1100 is further configured to receive a third request response message from the first terminal device. The third request response message includes the first information.

Optionally, the transceiver unit 1100 is further configured to send a fourth request message to a serving network device of the second terminal device. The fourth request message is used to request to configure configuration information of a sidelink reference signal of the second terminal device. The configuration information of the sidelink reference signal of the second terminal device is used by the first terminal device to receive the sidelink reference signal of the second terminal device. The transceiver unit 1100 is further configured to receive a fourth request response message from the serving network device of the second terminal device. The fourth request response message includes the configuration information of the sidelink reference signal of the second terminal device. The fourth request response message includes the first information.

Optionally, the transceiver unit 1100 is further configured to send a first configuration message to the first terminal device. The first configuration message includes configuration information of a sidelink reference signal of the second terminal device. The configuration information of the sidelink reference signal of the second terminal device is used by the first terminal device to receive the sidelink reference signal of the second terminal device. The first configuration message further includes the first information.

Optionally, the transceiver unit 1100 is further configured to receive a first message from the first terminal device. The first message includes an identifier of the second terminal device. The transceiver unit 1100 is further configured to send first indication information to a third terminal device. The first indication information indicates the third terminal device not to send a reference signal to the first terminal device. The third terminal device is a terminal device other than the second terminal device in all terminal devices covered by all network devices that the second network device requests to assist in positioning a target terminal.

For example, the second terminal device is a group of terminal devices, and the group of terminal devices includes one or more terminal devices.

The apparatus 1000 may implement the steps or the procedures performed by the second network device in the method embodiments according to embodiments of this application. The apparatus 1000 may include units configured to perform the method performed by the second network device in the embodiments shown in FIG. 4 to FIG. 10. A specific process in which each unit performs the foregoing corresponding steps has been described in detail in the foregoing method embodiments. For brevity, details are not described herein again.

In another possible implementation, the transceiver unit 1100 is configured to obtain first information. The first information includes synchronization information of a second terminal device. The synchronization information of the second terminal device includes synchronization information between the second terminal device and a synchronization source of the second terminal device. The second terminal device is configured to assist in positioning a location of a first terminal device. The second terminal device communicates with the first terminal device through a sidelink. The transceiver unit 1100 is further configured to send the first information to the first terminal device.

Optionally, the transceiver unit 1100 is specifically configured to receive the first information from the second terminal device.

Optionally, the transceiver unit 1100 is specifically configured to receive the first information from a serving network device of the second terminal device.

Optionally, the transceiver unit 1100 is further configured to send a first request message to the second terminal device. The first request message is used to request the synchronization information of the second terminal device. The transceiver unit 1100 is further configured to receive a first request response message from the second terminal device. The first request response message includes the first information.

Optionally, the transceiver unit 1100 is further configured to send a second request message to the serving network device of the second terminal device. The second request message is used to request the synchronization information of the second terminal device. The transceiver unit 1100 is further configured to receive a second request response message from the serving network device of the second terminal device. The second request response message includes the first information.

Optionally, the transceiver unit 1100 is further configured to send a fourth request message to a serving network device of the second terminal device. The fourth request message is used to request to configure configuration information of a sidelink reference signal of the second terminal device. The configuration information of the sidelink reference signal of the second terminal device is used by the first terminal device to receive the sidelink reference signal of the second terminal device. The transceiver unit 1100 is further configured to receive a fourth request response message from the serving network device of the second terminal device. The fourth request response message includes the configuration information of the sidelink reference signal of the second terminal device. The fourth request response message includes the first information.

Optionally, the transceiver unit 1100 is further configured to send a first configuration message to the first terminal device. The first configuration message includes configuration information of a sidelink reference signal of the second terminal device. The configuration information of the sidelink reference signal of the second terminal device is used by the first terminal device to receive the sidelink reference signal of the second terminal device. The first configuration message further includes the first information.

Optionally, the transceiver unit 1100 is further configured to receive a first message from the first terminal device. The first message includes an identifier of the second terminal device. The transceiver unit 1100 is further configured to send first indication information to a third terminal device. The first indication information indicates the third terminal device not to send a reference signal to the first terminal device. The third terminal device is a terminal device other than the second terminal device in all terminal devices covered by all network devices that the second network device requests to assist in positioning a target terminal.

For example, the second terminal device is a group of terminal devices, and the group of terminal devices includes one or more terminal devices.

The apparatus 1000 may implement the steps or the procedures performed by the second network device in the method embodiments according to embodiments of this application. The apparatus 1000 may include units configured to perform the method performed by the second network device in the embodiments shown in FIG. 4 to FIG. 10. A specific process in which each unit performs the foregoing corresponding steps has been described in detail in the foregoing method embodiments. For brevity, details are not described herein again.

In still another possible design, the apparatus 1000 may be configured to perform the actions performed by the first network device in the foregoing method embodiments. In this case, the apparatus 1000 may be the first network device or a component of the first network device. The transceiver unit 1100 is configured to perform receiving/sending-related operations on the first network device side in the foregoing method embodiments. The processing unit 1200 is configured to perform processing-related operations on the first network device side in the foregoing method embodiments.

In a possible implementation, the transceiver unit 1100 is configured to obtain first information. The first information includes synchronization information of a second terminal device. The first network device is a serving network device of the second terminal device. The second terminal device is configured to assist in positioning a location of a first terminal device. The second terminal device communicates with the first terminal device through a sidelink. The transceiver unit 1100 is further configured to send the first information to a second network device.

Optionally, the transceiver unit 1100 is further configured to receive a second request message from the second network device. The second request message is used to request the synchronization information of the second terminal device. The transceiver unit 1100 is further configured to send a second request response message to the second network device. The second request response message includes the first information.

Optionally, the transceiver unit 1100 is further configured to receive a fourth request message from the second network device. The fourth request message is used to request to configure configuration information of a sidelink reference signal of the second terminal device. The configuration information of the sidelink reference signal of the second terminal device is used by the first terminal device to receive the sidelink reference signal of the second terminal device. The transceiver unit 1100 is further configured to send a fourth request response message to the second network device. The fourth request response message includes the configuration information of the sidelink reference signal of the second terminal device. The fourth request response message further includes the first information.

Optionally, the transceiver unit 1100 is further configured to send a second message to the second terminal device. The second message includes the configuration information of the sidelink reference signal of the second terminal device.

Optionally, the transceiver unit 1100 is further configured to send a fifth request message to the second terminal device. The fifth request message is used to request the configuration information of the sidelink reference signal of the second terminal device. The transceiver unit 1100 is further configured to receive a fifth request response message from the second terminal device. The fifth request response message includes the configuration information of the sidelink reference signal of the second terminal device.

For example, the second terminal device is a group of terminal devices, and the group of terminal devices includes one or more terminal devices.

The apparatus 1000 may implement the steps or the procedures performed by the first network device in the method embodiments according to embodiments of this application. The apparatus 1000 may include units configured to perform the method performed by the first network device in the embodiments shown in FIG. 4 to FIG. 10. A specific process in which each unit performs the foregoing corresponding steps has been described in detail in the foregoing method embodiments. For brevity, details are not described herein again.

In still another possible design, the apparatus 1000 may be configured to perform the actions performed by the second terminal device in the foregoing method embodiments. In this case, the apparatus 1000 may be the second terminal device or a component of the second terminal device. The transceiver unit 1100 is configured to perform receiving/sending-related operations on the second terminal device side in the foregoing method embodiments. The processing unit 1200 is configured to perform processing-related operations on the second terminal device side in the foregoing method embodiments.

In a possible implementation, the processing unit 1200 is configured to determine synchronization information of the second terminal device. The synchronization information of the second terminal device includes synchronization information between the second terminal device and a synchronization source of the second terminal device. The transceiver unit 1100 is configured to send first information to a first device. The first information includes the synchronization information of the second terminal device. The second terminal device is configured to assist in positioning a location of a first terminal device. The second terminal device communicates with the first terminal device through a sidelink. The first device is the first terminal device or a second network device of a location management function network element.

Optionally, when the first device is the second network device, the transceiver unit 1100 is further configured to receive a first request message from the first device. The first request message is used to request the synchronization information of the second terminal device. The transceiver unit 1100 is further configured to send a first request response message to the first device. The first request response message includes the first information.

Optionally, when the first device is the first terminal device, the transceiver unit 1100 is further configured to send a second configuration message to the first device. The second configuration message includes configuration information of a sidelink reference signal of the second terminal device. The configuration information of the sidelink reference signal of the second terminal device is used by the first terminal device to receive the sidelink reference signal of the second terminal device. The second configuration message further includes the first information.

Optionally, the transceiver unit 1100 is further configured to receive a second message from a serving network device of the second terminal device. The second message includes the configuration information of the sidelink reference signal of the second terminal device.

Optionally, the transceiver unit 1100 is further configured to receive a fifth request message from a serving network device of the second terminal device. The fifth request message is used to request the configuration information of the sidelink reference signal of the second terminal device. The transceiver unit 1100 is further configured to send a fifth request response message to the serving network device of the second terminal device. The fifth request response message includes the configuration information of the sidelink reference signal of the second terminal device.

The apparatus 1000 may implement the steps or the procedures performed by the second terminal device in the method embodiments according to embodiments of this application. The apparatus 1000 may include units configured to perform the method performed by the second terminal device in the embodiments shown in FIG. 4 to FIG. 10. A specific process in which each unit performs the foregoing corresponding steps has been described in detail in the foregoing method embodiments. For brevity, details are not described herein again.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another suitable component that supports the described functions. In an optional example, a person skilled in the art may understand that the apparatus 1000 may be specifically the first terminal device in the foregoing embodiments, and may be configured to perform the procedures and/or steps corresponding to the first terminal device in the foregoing method embodiments. Alternatively, the apparatus 1000 may be specifically the second network device in the foregoing embodiments, and may be configured to perform the procedures and/or steps corresponding to the second network device in the foregoing method embodiments. Alternatively, the apparatus 1000 may be specifically the first network device in the foregoing embodiments, and may be configured to perform the procedures and/or steps corresponding to the first network device in the foregoing method embodiments. Alternatively, the apparatus 1000 may be specifically the second terminal device in the foregoing embodiments, and may be configured to perform the procedures and/or steps corresponding to the second terminal device in the foregoing method embodiments. To avoid repetition, details are not described herein again.

The apparatus 1000 in the foregoing solutions has functions of implementing corresponding steps performed by the devices in the foregoing methods. The functions may be implemented by hardware, or may be implemented by hardware executing corresponding software. The hardware or the software includes at least one module corresponding to the foregoing functions. For example, the transceiver unit may be replaced with a transceiver (where for example, a sending unit in the transceiver unit may be replaced with a transmitter, and a receiving unit in the transceiver unit may be replaced with a receiver), and another unit such as the processing unit may be replaced with a processor, respectively performing the receiving/sending operations and the processing-related operations in the method embodiments.

In addition, the transceiver unit 1100 may alternatively be a transceiver circuit (which may include, for example, a receiving circuit and a sending circuit), and the processing unit may be a processing circuit.

It should be noted that the apparatus in FIG. 11 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 12 is a diagram of a structure of a communication apparatus 10 according to this application. The apparatus 10 includes a processor 11. The processor 11 is coupled to a memory 12. The memory 12 is configured to store a computer program or instructions and/or data. The processor 11 is configured to: execute the computer program or the instructions stored in the memory 12, or read the data stored in the memory 12, to perform the method in the foregoing method embodiments.

Optionally, there are one or more processors 11.

Optionally, there are one or more memories 12.

Optionally, the memory 12 and the processor 11 are integrated together or separately disposed.

Optionally, as shown in FIG. 12, the apparatus 10 further includes a transceiver 13. The transceiver 13 is configured to: receive and/or send a signal. For example, the processor 11 is configured to control the transceiver 13 to receive and/or send the signal.

In a solution, the apparatus 10 is configured to implement the operations performed by the first terminal device in the foregoing method embodiments.

For example, the processor 11 is configured to execute the computer program or the instructions stored in the memory 12, to implement the related operations of the first terminal device in the foregoing method embodiments, for example, the methods performed by the first terminal device in the embodiments shown in FIG. 4 to FIG. 10.

In another solution, the apparatus 10 is configured to implement the operations performed by the second network device in the foregoing method embodiments.

For example, the processor 11 is configured to execute the computer program or the instructions stored in the memory 12, to implement the related operations of the second network device in the foregoing method embodiments, for example, the methods performed by the second network device in the embodiments shown in FIG. 4 to FIG. 10.

In still another solution, the apparatus 10 is configured to implement the operations performed by the first network device in the foregoing method embodiments.

For example, the processor 11 is configured to execute the computer program or the instructions stored in the memory 12, to implement the related operations of the first network device in the foregoing method embodiments, for example, the methods performed by the first network device in the embodiments shown in FIG. 4 to FIG. 10.

In still another solution, the apparatus 10 is configured to implement the operations performed by the second terminal device in the foregoing method embodiments.

For example, the processor 11 is configured to execute the computer program or the instructions stored in the memory 12, to implement the related operations of the second terminal device in the foregoing method embodiments, for example, the methods performed by the second terminal device in the embodiments shown in FIG. 4 to FIG. 10.

In addition, this application further provides a computer-readable storage medium. The computer-readable storage medium stores computer instructions. When the computer instructions are run on a computer, the methods in the method embodiments of this application are performed.

This application further provides a computer program product. The computer program product includes computer program code or instructions. When the computer program code or the instructions are run on a computer, the methods in the method embodiments of this application are performed.

In addition, this application further provides a chip, and the chip includes a processor. A memory configured to store a computer program is disposed independent of the chip. The processor is configured to execute the computer program stored in the memory, so that the methods in the method embodiments of this application are performed.

Further, the chip may include a communication interface. The communication interface may be an input/output interface, an interface circuit, or the like. Further, the chip may include the memory.

In addition, this application further provides a communication system, including one or more devices in the first terminal device, the second network device, the first network device, and the second terminal device in embodiments of this application.

It should be understood that the processor in embodiments of this application may be an integrated circuit chip, and has a signal processing capability. In an implementation process, steps in the foregoing method embodiments can be completed by using a hardware integrated logical circuit in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another suitable type.

A person of ordinary skill in the art may be aware that, in combination with units and algorithm steps of the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for detailed working processes of the foregoing system, apparatus, and unit, refer to the corresponding processes in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions of the embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium and includes several instructions for instructing a computer device (which may be a personal computer, a server, a network device, or the like) to perform all or a part of the steps of the methods in embodiments of this application. The foregoing storage medium includes various media that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A positioning method, comprising:

   obtaining, by a first terminal device, first information, wherein the first information comprises synchronization information of a second terminal device, the synchronization information of the second terminal device comprises synchronization information between the second terminal device and a synchronization source of the second terminal device, the second terminal device is configured to assist in positioning a location of the first terminal device, and the second terminal device communicates with the first terminal device through a sidelink; and
   determining, by the first terminal device, location information of the first terminal device based on the first information.

2. The method according to claim 1, wherein the obtaining, by a first terminal device, first information comprises:

   receiving, by the first terminal device, the first information from a second network device; or
   receiving, by the first terminal device, the first information from the second terminal device.

3. The method according to claim 1, wherein
   the obtaining, by a first terminal device, first information comprises:

   receiving, by the first terminal device, a first configuration message from a second network device, wherein the first configuration message comprises configuration information of a sidelink reference signal of the second terminal device, the configuration information of the sidelink reference signal of the second terminal device is used by the first terminal device to receive the sidelink reference signal of the second terminal device, and the first configuration message further comprises the first information; or
   receiving, by the first terminal device, a second configuration message from the second terminal device, wherein the second configuration message comprises configuration information of a sidelink reference signal of the second terminal device, the configuration information of the sidelink reference signal of the second terminal device is used by the first terminal device to receive the sidelink reference signal of the second terminal device, and the second configuration message further comprises the first information.

4. A positioning method, comprising:

   obtaining, by a first terminal device, first information, wherein the first information comprises synchronization information of a second terminal device, the synchronization information of the second terminal device comprises synchronization information between the second terminal device and a synchronization source of the second terminal device, the second terminal device is configured to assist in positioning a location of the first terminal device, and the second terminal device communicates with the first terminal device through a sidelink; and
   sending, by the first terminal device, the first information to a second network device.

5. The method according to claim 4, wherein the obtaining, by a first terminal device, first information comprises:
   receiving, by the first terminal device, the first information from the second terminal device.

6. The method according to claim 4, wherein
   the obtaining, by a first terminal device, first information comprises:

receiving, by the first terminal device, a second configuration message from the second terminal device, wherein the second configuration message comprises configuration information of a sidelink reference signal of the second terminal device, and the configuration information of the sidelink reference signal of the second terminal device is used by the first terminal device to receive the sidelink reference signal of the second terminal device; and

the second configuration message further comprises the first information.

7. The method according to any one of claims 1 to 6, wherein the method further comprises:
sending, by the first terminal device, a first message to the second network device, wherein the first message comprises an identifier of the second terminal device.

8. The method according to any one of claims 1 to 7, wherein the second terminal device is one or more terminal devices.

9. A positioning method, comprising:

obtaining, by a second network device, first information, wherein the first information comprises synchronization information of a second terminal device, the synchronization information of the second terminal device comprises synchronization information between the second terminal device and a synchronization source of the second terminal device, the second terminal device is configured to assist in positioning a location of a first terminal device, and the second terminal device communicates with the first terminal device through a sidelink; and determining, by the second network device, location information of the first terminal device based on the first information.

10. The method according to claim 9, wherein the obtaining, by a second network device, first information comprises:

receiving, by the second network device, the first information from the second terminal device; or receiving, by the second network device, the first information from a serving network device of the second terminal device; or receiving, by the second network device, the first information from the first terminal device.

11. The method according to claim 10, wherein the obtaining, by a second network device, first information comprises:

sending, by the second network device, a first request message to the second terminal device, wherein the first request message is used to request the synchronization information of the second terminal device, and receiving, by the second network device, a first request response message from the second terminal device, wherein the first request response message comprises the first information; or sending, by the second network device, a second request message to the serving network device of the second terminal device, wherein the second request message is used to request the synchronization information of the second terminal device, and receiving, by the second network device, a second request response message from the serving network device of the second terminal device, wherein the second request response message comprises the first information; or sending, by the second network device, a third request message to the first terminal device, wherein the third request message is used to request the synchronization information of the second terminal device, and receiving, by the second network device, a third request response message from the first terminal device, wherein the third request response message comprises the first information.

12. A positioning method, comprising:

obtaining, by a second network device, first information, wherein the first information comprises synchronization information of a second terminal device, the synchronization information of the second terminal device comprises synchronization information between the second terminal device and a synchronization source of the second terminal device, the second terminal device is configured to assist in positioning a location of a first terminal device, and the second terminal device communicates with the first terminal device through a sidelink; and sending, by the second network device, the first information to the first terminal device.

13. The method according to claim 12, wherein the obtaining, by a second network device, first information comprises:

receiving, by the second network device, the first information from the second terminal device; or

receiving, by the second network device, the first information from a serving network device of the second terminal device.

14. The method according to claim 12, wherein the obtaining, by a second network device, first information comprises:

sending, by the second network device, a first request message to the second terminal device, wherein the first request message is used to request the synchronization information of the second terminal device, and receiving, by the second network device, a first request response message from the second terminal device, wherein the first request response message comprises the first information; or

sending, by the second network device, a second request message to a serving network device of the second terminal device, wherein the second request message is used to request the synchronization information of the second terminal device, and receiving, by the second network device, a second request response message from the serving network device of the second terminal device, wherein the second request response message comprises the first information.

15. The method according to claim 9 or 12, wherein
the obtaining, by a second network device, first information comprises:

sending, by the second network device, a fourth request message to a serving network device of the second terminal device, wherein the fourth request message is used to request to configure configuration information of a sidelink reference signal of the second terminal device, and the configuration information of the sidelink reference signal of the second terminal device is used by the first terminal device to receive the sidelink reference signal of the second terminal device; and

receiving, by the second network device, a fourth request response message from the serving network device of the second terminal device, wherein the fourth request response message comprises the configuration information of the sidelink reference signal of the second terminal device; and

the fourth request response message comprises the first information.

16. The method according to claim 9 or 12, wherein
the obtaining, by a second network device, first information comprises:

sending, by the second network device, a first configuration message to the first terminal device, wherein the first configuration message comprises configuration information of a sidelink reference signal of the second terminal device, and the configuration information of the sidelink reference signal of the second terminal device is used by the first terminal device to receive the sidelink reference signal of the second terminal device; and

the first configuration message further comprises the first information.

17. The method according to any one of claims 9 to 16, wherein the method further comprises:

receiving, by the second network device, a first message from the first terminal device, wherein the first message comprises an identifier of the second terminal device; and

sending, by the second network device, first indication information to a third terminal device, wherein the first indication information indicates the third terminal device not to send a reference signal to the first terminal device, and the third terminal device is a terminal device other than the second terminal device in all terminal devices covered by all network devices that the second network device requests to assist in positioning a target terminal.

18. The method according to any one of claims 9 to 17, wherein the second terminal device is one or more terminal devices.

19. A positioning method, comprising:

obtaining, by a first network device, first information, wherein the first information comprises synchronization information of a second terminal device, the first network device is a serving network device of the second terminal device, the synchronization information of the second terminal device comprises synchronization information between the second terminal device and a synchronization source of the second terminal device, the second terminal device is configured to assist in positioning a location of a first terminal device, and the second terminal device communicates with the first terminal device through a sidelink; and

sending, by the first network device, the first information to a second network device.

20. The method according to claim 19, wherein the sending, by the first network device, the first information to a second network device comprises:

receiving, by the first network device, a second request message from the second network device, wherein the second request message is used to request the synchronization information of the second terminal device; and sending, by the first network device, a second request response message to the second network device, wherein the second request response message comprises the first information.

21. The method according to claim 19, wherein the sending, by the first network device, the first information to a second network device comprises:

receiving, by the first network device, a fourth request message from the second network device, wherein the fourth request message is used to request to configure configuration information of a sidelink reference signal of the second terminal device, and the configuration information of the sidelink reference signal of the second terminal device is used by the first terminal device to receive the sidelink reference signal of the second terminal device; and
sending, by the first network device, a fourth request response message to the second network device, wherein the fourth request response message comprises the configuration information of the sidelink reference signal of the second terminal device; and
the fourth request response message further comprises the first information.

22. The method according to claim 21, wherein the method further comprises:
sending, by the first network device, a second message to the second terminal device, wherein the second message comprises the configuration information of the sidelink reference signal of the second terminal device.

23. The method according to claim 21, wherein the method further comprises:

sending, by the first network device, a fifth request message to the second terminal device, wherein the fifth request message is used to request the configuration information of the sidelink reference signal of the second terminal device; and
receiving, by the first network device, a fifth request response message from the second terminal device, wherein the fifth request response message comprises the configuration information of the sidelink reference signal of the second terminal device.

24. The method according to any one of claims 19 to 23, wherein the second terminal device is one or more terminal devices.

25. A positioning method, comprising:

determining, by a second terminal device, synchronization information of the second terminal device, wherein the synchronization information of the second terminal device comprises synchronization information between the second terminal device and a synchronization source of the second terminal device; and
sending, by the second terminal device, first information to a first device, wherein the first information comprises the synchronization information of the second terminal device, the second terminal device is configured to assist in positioning a location of a first terminal device, the second terminal device communicates with the first terminal device through a sidelink, and the first device is the first terminal device or a second network device.

26. The method according to claim 25, wherein when the first device is the second network device, the sending, by the second terminal device, first information to a first device comprises:

receiving, by the second terminal device, a first request message from the first device, wherein the first request message is used to request the synchronization information of the second terminal device; and
sending, by the second terminal device, a first request response message to the first device, wherein the first request response message comprises the first information.

27. The method according to claim 25, wherein when the first device is the first terminal device, the sending, by the second terminal device, first information to a first device comprises:

sending, by the second terminal device, a second configuration message to the first device, wherein the second configuration message comprises configuration information of a sidelink reference signal of the second terminal device, and the configuration information of the sidelink reference signal of the second terminal device is used by the first terminal device to receive the sidelink reference signal of the second terminal device; and

the second configuration message further comprises the first information.

28. The method according to any one of claims 25 to 27, wherein the method further comprises:
receiving, by the second terminal device, a second message from a serving network device of the second terminal device, wherein the second message comprises the configuration information of the sidelink reference signal of the second terminal device.

29. The method according to any one of claims 25 to 27, wherein the method further comprises:

receiving, by the second terminal device, a fifth request message from a serving network device of the second terminal device, wherein the fifth request message is used to request the configuration information of the sidelink reference signal of the second terminal device; and
sending, by the second terminal device, a fifth request response message to the serving network device of the second terminal device, wherein the fifth request response message comprises the configuration information of the sidelink reference signal of the second terminal device.

30. The method according to any one of claims 1 to 29, wherein

the synchronization source of the second terminal device is the serving network device of the second terminal device, and the synchronization information is a time difference between a subframe boundary of the second terminal device and a subframe boundary of the serving network device of the second terminal device; or
the synchronization source of the second terminal device is a global navigation satellite system GNSS, and the synchronization information is a direct frame number offset of the second terminal device.

31. A communication apparatus, comprising a unit or a module configured to perform the method according to any one of claims 1 to 30.

32. A communication apparatus, wherein the communication apparatus comprises at least one processor; and

the at least one processor is configured to execute a computer program stored in a memory, to enable the apparatus to perform the method according to any one of claims 1 to 8;
the at least one processor is configured to execute a computer program stored in a memory, to enable the apparatus to perform the method according to any one of claims 9 to 18;
the at least one processor is configured to execute a computer program stored in a memory, to enable the apparatus to perform the method according to any one of claims 19 to 24; or
the at least one processor is configured to execute a computer program stored in a memory, to enable the apparatus to perform the method according to any one of claims 25 to 30.

33. The apparatus according to claim 32, wherein the apparatus further comprises the memory and/or a communication interface, and the communication interface is coupled to the processor; and
the communication interface is configured to input and/or output information.

34. A computer-readable storage medium, comprising a computer program, wherein

when the computer program is run on a computer, the computer is enabled to perform the method according to any one of claims 1 to 8;
when the computer program is run on a computer, the computer is enabled to perform the method according to any one of claims 9 to 18;
when the computer program is run on a computer, the computer is enabled to perform the method according to any one of claims 19 to 24; or
when the computer program is run on a computer, the computer is enabled to perform the method according to any one of claims 25 to 30.

35. A computer program product, wherein the computer program product comprises computer program code, and

when the computer program code is run on a computer, the computer is enabled to perform the method according to any one of claims 1 to 8;
when the computer program code is run on a computer, the computer is enabled to perform the method according to any one of claims 9 to 18;
when the computer program code is run on a computer, the computer is enabled to perform the method according to any one of claims 19 to 24; or
when the computer program code is run on a computer, the computer is enabled to perform the method according to any one of claims 25 to 30.

FIG. 1

FIG. 2

ΔS2    ΔS3

((ϙ))
t2'

Neighboring
base station 103

((ϙ)) t1'
PRS 1
PRS 2
t2

Serving base
station 102
t1

UE 101

t3
Curve 1

Curve 2

PRS 3
((ϙ))

t3'

Neighboring
base station 104

FIG. 3

S401: A second network device obtains first information, where
the first information includes synchronization information of a
second terminal device, the synchronization information of the
second terminal device includes synchronization information
between the second terminal device and a synchronization
source of the second terminal device, the second terminal
device is configured to assist in positioning a location of a first
terminal device, and the second terminal device communicates
with the first terminal device through a sidelink

S402: The second network device determines location
information of the first terminal device based on the first
information

FIG. 4

FIG. 5

| Location management device | First network device | Second terminal device | First terminal device |

S601: The LMF performs capability interaction with the first terminal device

S602: Fourth request message →

← S603: Fourth request response message

S604: Obtain configuration information of a sidelink reference signal of the second terminal device

S605: First positioning request message →

S606: Measure a first sidelink positioning reference signal to obtain a first measurement result

← S607: First positioning request response message

S608: Second request message →

← S609: Second request response message

S610: First request message →

← S611: First request response message

S612: Determine a location of the first terminal device based on first information

FIG. 6

| Location management device | First network device | Second terminal device | First terminal device |
|---|---|---|---|

S701: The LMF performs capability interaction with the first terminal device

S702: Fourth request message →

← S703: Fourth request response message

S704: Obtain configuration information of a sidelink reference signal of the second terminal device

S705: First information →

S706: First positioning request message →

S707: Measure a first sidelink positioning reference signal to obtain a first measurement result

← S708: First positioning request response message

S709: Determine a location of the first terminal device based on the first information

**FIG. 7**

S801: A first terminal device obtains first information, where the first information includes synchronization information of a second terminal device, the synchronization information of the second terminal device includes synchronization information between the second terminal device and a synchronization source of the second terminal device, the second terminal device is configured to assist in positioning a location of the first terminal device, and the second terminal device communicates with the first terminal device through a sidelink

S802: The first terminal device determines location information of the first terminal device based on the first information

**FIG. 8**

| Location management device | First network device | Second terminal device | First terminal device |
|---|---|---|---|

S901: The LMF performs capability interaction with the first terminal device

S902: Fourth request message →

← S903: Fourth request response message

S904: Obtain configuration information of a sidelink reference signal of the second terminal device

S905: Second request message →

← S906: Second request response message

S907: First request message →

← S908: First request response message

S909: First information →

S910: Measure a first reference signal to obtain a first measurement result

S911: Determine location information of the first terminal device based on the first information

FIG. 9

| Location management device | First network device | Second terminal device | First terminal device |
|---|---|---|---|

S1001: The LMF performs capability interaction with the first terminal device

S1002: Fourth request message →

← S1003: Fourth request response message

S1004: Obtain configuration information of a sidelink reference signal of the second terminal device

S1005: First information →

S1006: Measure a first reference signal to obtain a first measurement result

S1007: Determine location information of the first terminal device based on the first information

FIG. 10

Communication apparatus 1000

Transceiver unit 1100

Processing unit 1200

FIG. 11

Communication apparatus 10

Processor
11

Memory
12

Transceiver
13

FIG. 12

## INTERNATIONAL SEARCH REPORT

| International application No. |
| --- |
| **PCT/CN2023/094200** |

**A. CLASSIFICATION OF SUBJECT MATTER**

H04W 4/02(2018.01)i

According to International Patent Classification (IPC) or to both national classification and IPC

**B. FIELDS SEARCHED**

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, ENTXTC, 3GPP, CNKI, IEEE: 侧行链路, sidelink, SL, 定位, position+, SL-PRS, 同步, synchron+, SLSS

**C. DOCUMENTS CONSIDERED TO BE RELEVANT**

| Category* | Citation of document, with indication, where appropriate, of the relevant passages | Relevant to claim No. |
| --- | --- | --- |
| X | US 2022077990 A1 (QUALCOMM INC.) 10 March 2022 (2022-03-10)<br>claims 1-30, and description, paragraphs 109 and 169-321 | 1-35 |
| A | CN 114205735 A (SHANGHAI LANGBO COMMUNICATION TECHNOLOGY CO., LTD.)<br>18 March 2022 (2022-03-18)<br>entire document | 1-35 |
| A | US 2022069960 A1 (QUALCOMM INC.) 03 March 2022 (2022-03-03)<br>entire document | 1-35 |
| A | WO 2021092813 A1 (NOKIA SHANGHAI BELL CO., LTD. et al.) 20 May 2021<br>(2021-05-20)<br>entire document | 1-35 |
| A | WO 2021215771 A1 (LG ELECTRONICS INC.) 28 October 2021 (2021-10-28)<br>entire document | 1-35 |
| A | XIAOMI. "New SID: Study on Support of Sidelink positioning and Ranging in NR"<br>*3GPP TSG RAN Meetings #93 RP-211777*, 17 September 2021 (2021-09-17),<br>entire document | 1-35 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **31 May 2023** | **06 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094200**

| Patent document cited in search report | | | Publication date (day/month/year) | Patent family member(s) | | | Publication date (day/month/year) |
|---|---|---|---|---|---|---|---|
| US | 2022077990 | A1 | 10 March 2022 | WO | 2022056004 | A1 | 17 March 2022 |
| | | | | BR | 112023003397 | A2 | 11 April 2023 |
| | | | | IN | 202327002238 | A | 10 February 2023 |
| CN | 114205735 | A | 18 March 2022 | | None | | |
| US | 2022069960 | A1 | 03 March 2022 | WO | 2022051358 | A1 | 10 March 2022 |
| | | | | IN | 202227073405 | A | 27 January 2023 |
| WO | 2021092813 | A1 | 20 May 2021 | EP | 4059283 | A1 | 21 September 2022 |
| | | | | US | 2022393820 | A1 | 08 December 2022 |
| | | | | CN | 114651492 | A | 21 June 2022 |
| WO | 2021215771 | A1 | 28 October 2021 | KR | 20230003465 | A | 06 January 2023 |

Form PCT/ISA/210 (patent family annex) (July 2022)

**EP 4 521 779 A1**

**Patent documents cited in the description**

- CN 202210728631X
- CN 202210555591